# EUROPEAN PATENT SPECIFICATION

(11) **EP 1 845 240 B1**
(45) Date of publication and mention of the grant of the patent: **20.08.2014**
(21) Application number: 07007626.0
(22) Date of filing: 13.04.2007
(51) Int. Cl.: F02B 27/02, F02M 35/10, F02M 35/16

(54) **Vehicle**
Fahrzeug
Véhicule

(30) Priority: 14.04.2006 JP 2006111560; 20.09.2006 JP 2006253649
(43) Date of publication of application: 17.10.2007
(73) Proprietor: Yamaha Hatsudoki Kabushiki Kaisha, Iwata-shi, Shizuoka 438-8501 (JP)
(72) Inventor: Sudoh, Takehiko, Iwata-shi Shizuoka-ken 438-8501 (JP); Kobayashi, Makoto, Iwata-shi Shizuoka-ken 438-8501 (JP)
(74) Representative: Grünecker, Kinkeldey, Stockmair & Schwanhäusser

(56) References cited:
- JP-A- 9 133 055
- JP-A- 59 218 329
- US-A- 4 890 586

## Description

The present invention relates to a vehicle, and more particularly to a vehicle having a funnel for introducing air to an intake port of an engine.

Conventionally, there is known an intake system having a funnel for introducing air to an intake port of an engine (for example, see Patent Document 1). Patent Document 1 discloses an intake system including a fixed funnel for introducing air to an intake port of an engine, a movable funnel movably disposed on the air supply side of the fixed funnel, a rotary arm (link mechanism) disposed on one side of and attached to the movable funnel, a rotary shaft (link mechanism) disposed on the one side of the movable funnel for attachment of the rotary arm, and a motor disposed on the one side of the movable funnel for driving the rotary arm. In this intake system, the rotary arm is moved rotationally about the rotary shaft by the driving force of the motor, so that the movable funnel attached to the rotary arm can move away from and come into contact with the fixed funnel.

Patent Document 1: JP-U-Sho 63-182229

With the structure disclosed in Patent Document 1, however, the motor for driving the rotary arm is disposed on the one side of the movable funnel, which is the same side as the rotary arm is disposed, and hence a space for the motor is required around the rotary arm. As a result, it is difficult to simplify the structure of the surrounding area of the rotary arm (link mechanism).

The prior art in document JP 59-218329 refers to a suction device of an internal combustion engine. This suction device comprises fixed pipes and moving pipes, whereas corresponding to the rotation speed of an engine, a driving shaft is turned through the working of a wire, running around pulleys, with the aid of a servomotor, in order to move the moving pipes through racks gearing with pinions. Thereby, the overall length of the suction passages may be extended. According to JP 59-218329, the servomotor is disposed on a side of the moving pipes, which is opposite to the sides at which the pulleys are arranged.

The present invention has been made to solve the foregoing problem, and therefore has an object to provide a vehicle having a simplified structure of a link mechanism for moving a movable funnel and the surrounding area of the link mechanism.

This objective is solved in an inventive manner by a vehicle comprising an engine having an intake port, a fixed funnel for introducing air to the intake port of the engine, a movable funnel movably disposed on an air supply side of the fixed funnel and configured to introduce air to the intake port of the engine in conjunction with the fixed funnel, a link mechanism movably supporting the movable funnel and being disposed on a first side of the movable funnel, and a drive source for driving the link mechanism to move the movable funnel, wherein said drive source is disposed on a second side of the movable funnel, said second side being arranged opposite to the first side of the link mechanism.

According to the invention, the link mechanism includes a link lever movably supporting the movable funnel and a rotary shaft, wherein the movable funnel is moved by rotation of the link lever of the rotary shaft.

Preferably, the link mechanism is disposed on a front or rear side of the movable funnel in a running direction of the vehicle, and the drive source is disposed on the opposite second side of the link mechanism with respect to the movable funnel in the running direction of the vehicle.

According to a preferred embodiment, the vehicle further comprises a casing for housing the fixed funnel and the movable funnel therein, wherein the link mechanism is disposed inside the casing, and the drive source is disposed outside the casing.

Preferably, the air is taken into the movable funnel from a side thereof, and the link mechanism is disposed on the side of the movable funnel from which the air is taken.

Further, preferably the air is taken into the movable funnel from a front or rear side thereof in a running direction of the vehicle.

According to a preferred embodiment, the vehicle further comprises a plurality of movable funnels and a transmission shaft disposed between the plurality of movable funnels for transmitting driving force from the drive source to the link mechanism.

Preferably, the link mechanism includes a link lever movably supporting the movable funnel and a rotary shaft, wherein the movable funnel is moved by rotation of the link lever about the rotary shaft.

Further, preferably the link mechanism includes a parallel link for translatably supporting the movable funnel.

According to a preferred embodiment, the vehicle further comprises a first fuel injection system disposed below the fixed funnel, and a second fuel injection system disposed above the movable funnel.

Preferably, a fuel injection part of the second fuel injection system is disposed so as to be in an air passageway of the movable funnel when the movable funnel is arranged in a position spaced apart from the fixed funnel.

According to a preferred embodiment, the vehicle further comprises a plurality of fixed funnels and a position regulating member for regulating attachment positions of the plurality of fixed funnels.

According to another preferred embodiment, the vehicle further comprises a cleaner casing for housing the fixed funnels and the movable funnel therein, and a filter attached to the cleaner casing for purifying the air, wherein the position regulating member functions as a guide when attaching the filter to the cleaner casing.

According to yet another preferred embodiment, the vehicle further comprises a cleaner casing for housing the fixed funnel and the movable funnel therein, a filter attached to the cleaner casing for purifying the air, and a guide part that functions as a guide when attaching the filter to the cleaner casing.

According to still another preferred embodiment, the vehicle further comprises a seal member disposed between the fixed funnel and the movable funnel.

In the following, the present invention is explained in greater detail with respect to several embodiments thereof in conjunction with the accompanying drawings, wherein:
- FIG. 1: is a side view showing the entire structure of a motorcycle according to an embodiment,
- FIG. 2: is a plan view of the surrounding area of funnels of the motorcycle according to the embodiment shown in FIG. 1,
- FIG. 3: is a side view of the surrounding area of the funnels of the motorcycle according to the embodiment shown in FIG. 1,
- FIG. 4: is a cross sectional view for explaining the attachment structure of an air filter to a cleaner box in the motorcycle according to the embodiment shown in FIG. 1,
- FIG. 5: is a side view for explaining the structure of the cleaner box of the motorcycle according to the embodiment shown in FIG. 1,
- FIG. 6: is a side view for explaining the attachment structure of a funnel moving mechanism to the cleaner box in the motorcycle according to the embodiment shown in FIG. 1,
- FIG. 7: is a front view of the surrounding area of the funnels of the motorcycle according to the embodiment shown in FIG. 1,
- FIG. 8: is a perspective view with the movable funnels in their spaced positions in the motorcycle according to the embodiment shown in FIG. 1,
- FIG. 9: is a side view of the surrounding area of the funnel moving mechanism with the movable funnels in their spaced positions in the motorcycle according to the embodiment shown in FIG. 1,
- FIG. 10: is a side view of the surrounding area of a parallel link with the movable funnels in their spaced positions in the motorcycle according to the embodiment shown in FIG. 1,
- FIG. 11: is a perspective view with the movable funnels in their contacting positions in the motorcycle according to the embodiment shown in FIG. 1,
- FIG. 12: is a side view of the surrounding area of the funnel moving mechanism with the movable funnels in their contacting positions in the motorcycle according to the embodiment shown in FIG. 1,
- FIG. 13: is a side view of the surrounding area of the parallel link with the movable funnels in their contacting positions in the motorcycle according to the embodiment shown in FIG. 1,
- FIG. 14: is a plan view for explaining the detailed structure of the surrounding area of the funnels of the motorcycle according to the embodiment shown in FIG. 1,
- FIG. 15: is a front view of fixed funnels of the motorcycle according to the embodiment shown in FIG. 1,
- FIG. 16: is a cross sectional view for explaining the attachment structure of the fixed funnels shown in FIG. 15 to a throttle body,
- FIG. 17: is a cross sectional view for explaining the attachment structure of the fixed funnels shown in FIG. 15 to the throttle body,
- FIG. 18: is an enlarged cross sectional view of the surrounding area of a guide member of the motorcycle according to the embodiment shown in FIG. 1,
- FIG. 19: is a front view of the movable funnels of the motorcycle according to the embodiment shown in FIG. 1,

- FIG. 20: is a perspective view for explaining the structure of a support shaft for the movable funnels shown in FIG. 19,
- FIG. 21: is a plan view for explaining the structure of the support shaft for the movable funnels shown in FIG. 19,
- FIG. 22: is a side view of the surrounding area of a split bushing for use in the motorcycle according to the embodiment shown in FIG. 1,
- FIG. 23: is a cross sectional view of the surrounding area of the split bushing for use in the motorcycle according to the embodiment shown in FIG. 1,
- FIG. 24: is a perspective view of the split bushing for use in the motorcycle according to the embodiment shown in FIG. 1,
- FIG. 25: is a side view of the surrounding area of the split bushing for use in the motorcycle according to the embodiment shown in FIG. 1,
- FIG. 26: is a side view of the surrounding area of the split bushing for use in the motorcycle according to the embodiment shown in FIG. 1,
- FIG. 27: is a cross sectional view for explaining the detailed structure of a seal member of the motorcycle according to the embodiment shown in FIG. 1,
- FIG. 28: is a cross sectional view for explaining the detailed structure of the seal member of the motorcycle according to the embodiment shown in FIG. 1,
- FIG. 29: is a side view of the surrounding area of the parallel link for use in the motorcycle according to the embodiment shown in FIG. 1,

- FIG. 30: is a perspective view for explaining the structure of a fitting part of the parallel link shown in FIG. 29,
- FIG. 31: is a side view of the surrounding area of the parallel link for use in the motorcycle according to the embodiment shown in FIG. 1,
- FIG. 32: is a side view of the surrounding area of the parallel link for use in the motorcycle according to the embodiment shown in FIG. 1,
- FIG. 33: is a cross sectional view for explaining the structure of a movable member of the motorcycle according to the embodiment shown in FIG. 1, and
- FIG. 34: is a cross sectional view for explaining the structure of the movable member of the motorcycle according to the embodiment shown in FIG. 1.

### Description of Reference Numerals and Symbols:

14: engine
17a: intake port
20: injector (first fuel injection system)
24: cleaner box (casing, cleaner casing)
25: air filter (filter)
26: fixed funnel
27: movable funnel
27a: air passageway
28: injector (second fuel injection system)
28a: fuel injection part
31: guide member (position regulating member, guide member)
35: seal member
41: rotary shaft (link mechanism)
42: parallel link (link mechanism)
43: upper link lever (link mechanism, link lever)
44: lower link lever (link mechanism, link lever)
46: motor (drive source)
49: movable shaft (transmission shaft)

Description will hereinafter be made of an embodiment with reference to the accompanying drawings.

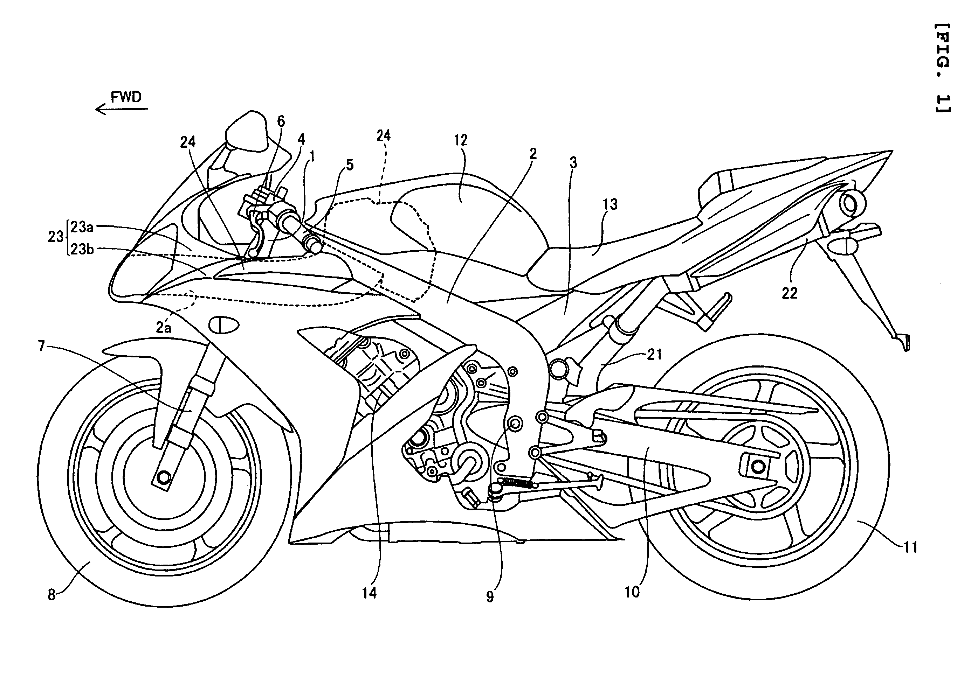

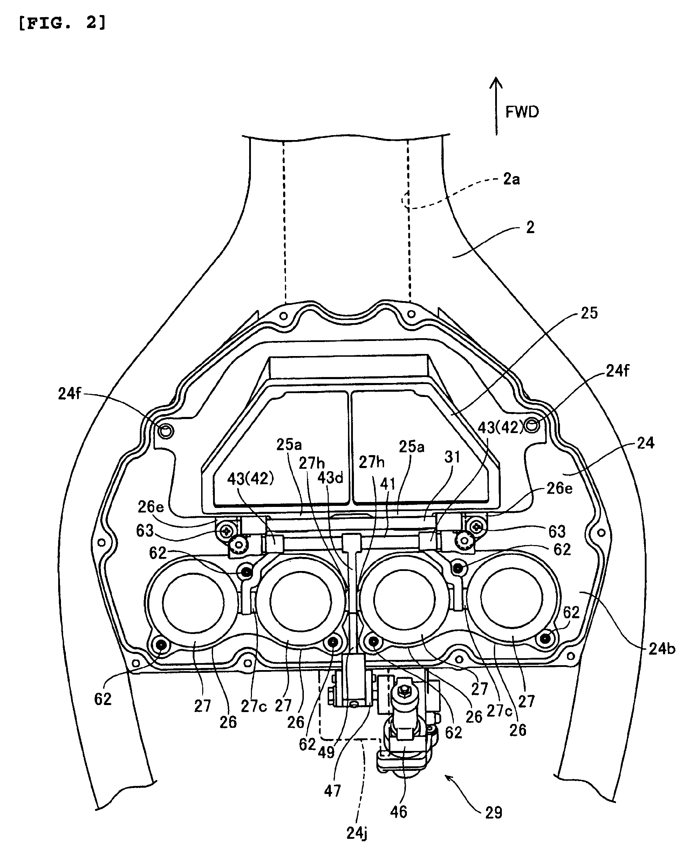

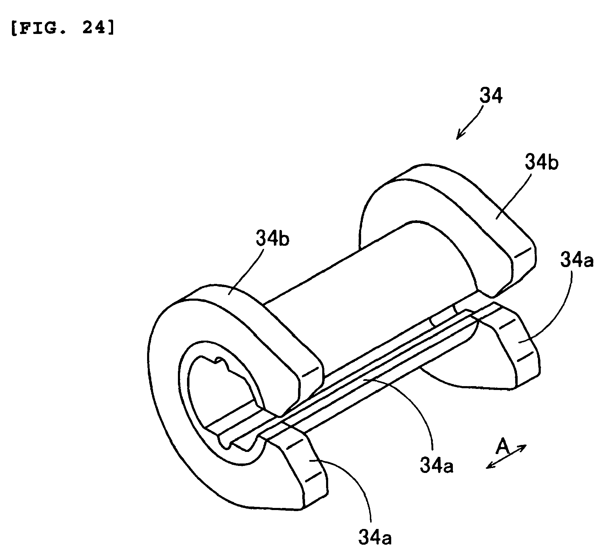

FIG. 1 is a side view showing the entire structure of a motorcycle according to an embodiment. FIGs. 2 to 34 illustrate the detailed structure of a funnel of the motorcycle according to the embodiment shown in FIG. 1. In the description of this embodiment, a motorcycle is taken as an example of the vehicle of the present teaching. In the drawings, "FWD" indicates the forward or running direction of the motorcycle. Now, the structure of the motorcycle according to this embodiment is described with reference to FIGs. 1 to 34.

As shown in FIG. 1, the motorcycle of this embodiment has a head pipe 1 and a main frame 2 with its front end connected to the head pipe 1. As shown in FIG. 2, the main frame 2 is branched to extend leftward and rightward with respect to the forward direction of the vehicle body (FWD direction indicated by the arrow). The main frame 2 is provided with an air intake passage 2a for introducing air into a cleaner box 24 to be described later. As shown in FIG. 1, the main frame 2 is formed to extend rearward and downward. A seat rail 3 extending rearward and upward is connected to the main frame 2. A steering mechanism 4 is attached to the head pipe 1 for rotational movement. Handlebars 5 are attached to an upper part of the steering mechanism 4. A clutch lever 6 is attached to the handlebars 5. A front fork 7 is attached to a lower part of the steering mechanism 4. A front wheel 8 is rotatably mounted at the lower end of the front fork 7.

The front end of a swing arm 10 is attached to the rear end of the main frame 2 via a pivot shaft 9. A rear wheel 11 is rotatably mounted at the rear end of the swing arm 10. A fuel tank 12 is disposed above the main frame 2, and a seat 13 is disposed above the seat rail 3. An engine 14 is mounted below the main frame 2.

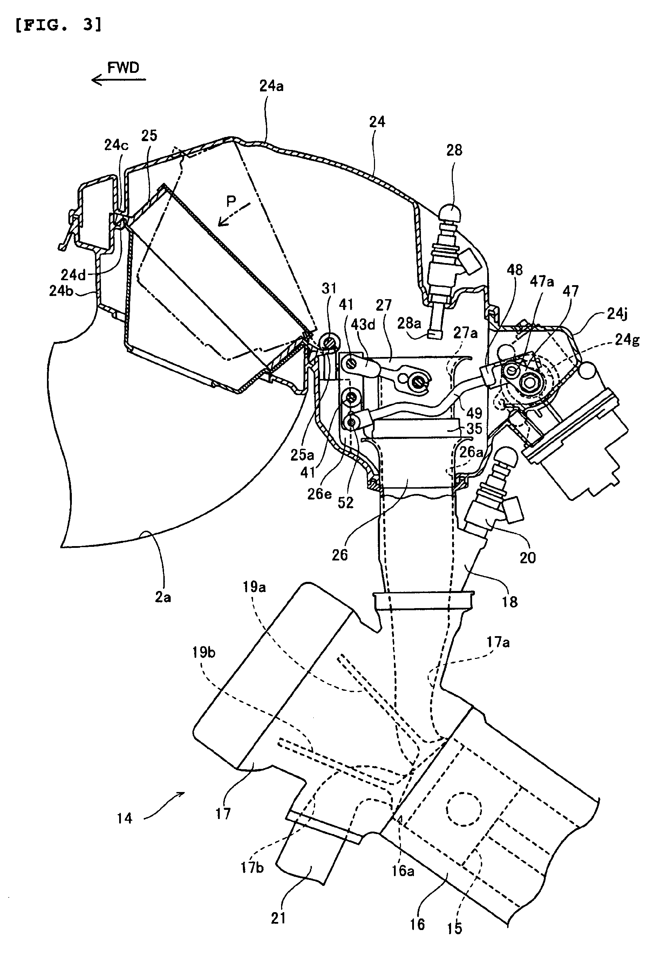

As shown in FIG. 3, the engine 14 includes a piston 15, a cylinder 16, a cylinder head 17 and a throttle body 18. The piston 15 is fitted in the cylinder 16, and the cylinder head 17 is disposed to plug one opening of the cylinder 16. The cylinder head 17 is formed with an intake port 17a and an exhaust port 17b. The intake port 17a is provided to supply a mixture of air and fuel to a combustion chamber 16a of the cylinder 16. The exhaust port 17b is provided to exhaust a residual gas from the combustion chamber 16a of the cylinder 16 after combustion. The intake port 17a and the exhaust port 17b are provided with an intake valve 19a and an exhaust valve 19b, respectively. The throttle body 18 is attached to an opening of the intake port 17a. An injector 20 for injecting fuel into the intake port 17a is attached to the throttle body 18. The injector 20 is an example of the "first fuel injection system" of the present embodiment. An exhaust pipe 21 is attached to an opening of the exhaust port 17b, and a muffler 22 (see FIG. 1) is connected to the exhaust pipe 21. Although only one cylinder 16 is shown in FIG. 3, four cylinders 16 are actually provided at predetermined intervals in the width direction of the vehicle body. That is, the engine 14 of this embodiment is a four-cylinder type.

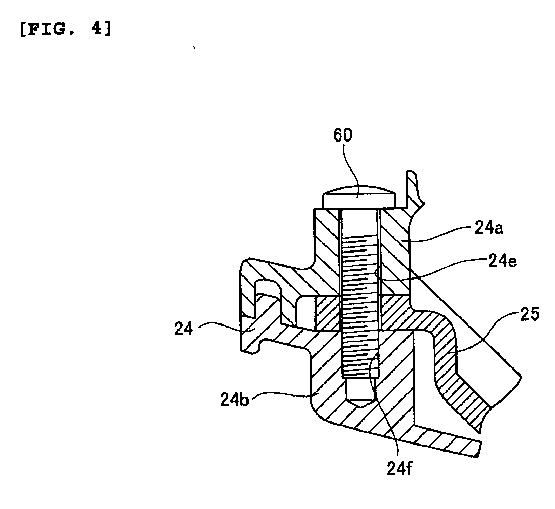

As shown in FIG. 1, the front side of the vehicle body is covered by a front cowl 23, which includes an upper cowl 23a and a lower cowl 23b. As shown in FIGs. 1 and 2, a cleaner box 24 for receiving air supplied from the air intake passage 2a of the main frame 2 is disposed between the left and right branches of the main frame 2. The cleaner box 24 is an example of the "casing" and the "cleaner casing" of the present embodiment. As shown in FIGs. 2 and 3, an air filter 25 is disposed in the cleaner box 24 to purify air supplied from the air intake passage 2a of the main frame 2. The air filter 25 is an example of the "filter" of the present embodiment. As shown in FIG. 3, the air filter 25 is secured by being interposed between an upper box part 24a and a lower box part 24b of the cleaner box 24. Specifically, as shown in FIG. 3, the front part of the air filter 25 is secured by being interposed by a pressing part 24c of the upper box part 24a and a support part 24d of the lower box part 24b. As shown in FIGs. 2 and 4, the longitudinal center of the air filter 25 is screwed with a screw 60 (see FIG. 4) to a screw hole 24e (see FIG. 4) of the upper box part 24a and a screw hole 24f of the lower box part 24b. As shown in FIG. 3, a contacting portion 25a at the rear part of the air filter 25 is secured by being interposed between a guide member 31 to be described later and the lower box part 24b.

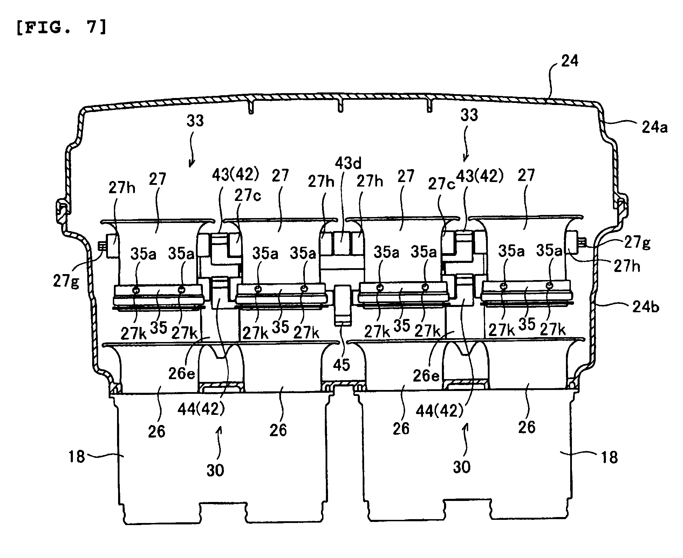

In this embodiment, as shown in FIGs. 3 and 7, a fixed funnel 26 and a movable funnel 27 are provided in the cleaner box 24. As shown in FIG. 3, an injector 28 is attached to an upper part of the cleaner box 24. The injector 28 is an example of the "second fuel injection system" of the present embodiment. The injector 28 is provided to inject fuel into the intake port 17a, together with the injector 20, when the engine 14 is rotating at a high speed. The injector 28 is disposed above the movable funnel 27.

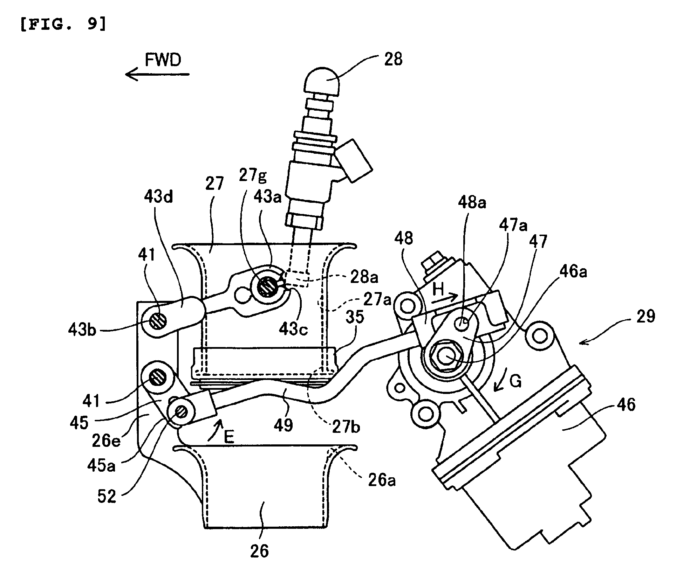

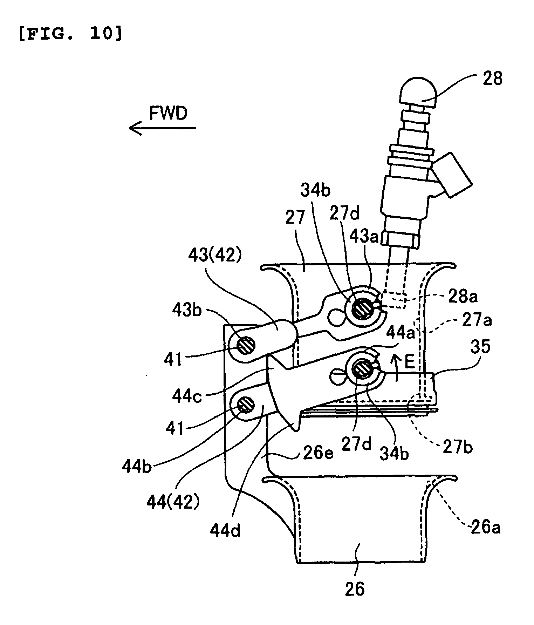

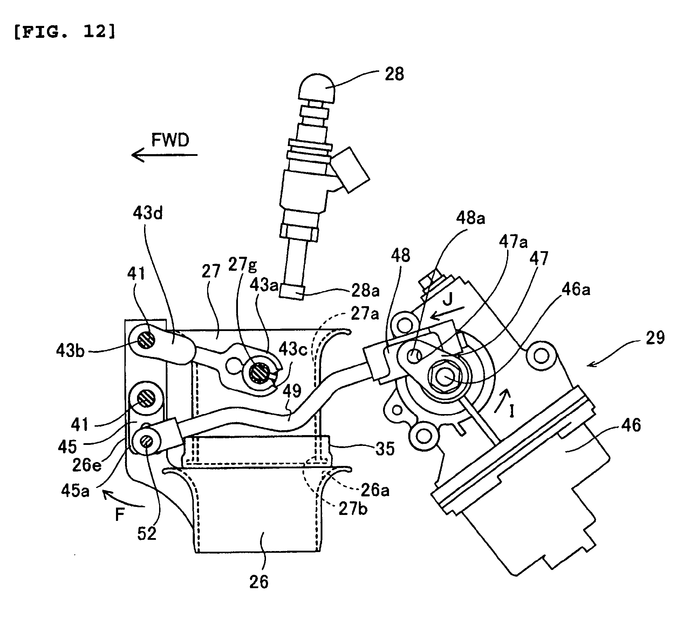

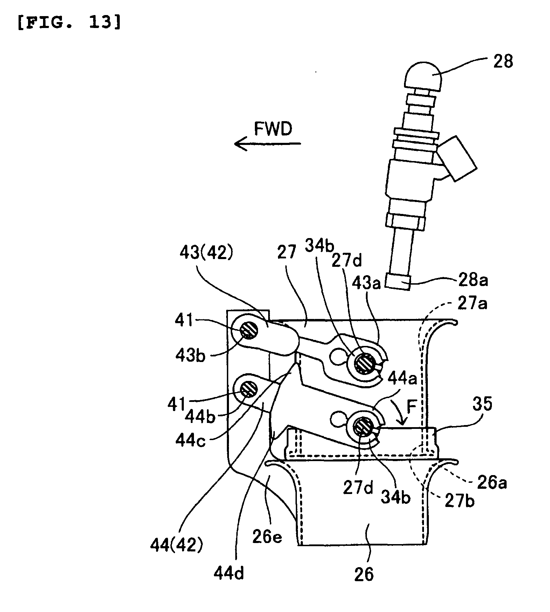

In this embodiment, a fuel injection part 28a of the injector 28 is disposed so as to be in an air passageway 27a of the movable funnel 27 when the movable funnel 27 is spaced apart from the fixed funnel 26 (as shown in FIGs. 9 and 10), and is disposed so as to be above the movable funnel 27 when the movable funnel 27 is in contact with the fixed funnel 26 (as shown in FIGs. 12 and 13).

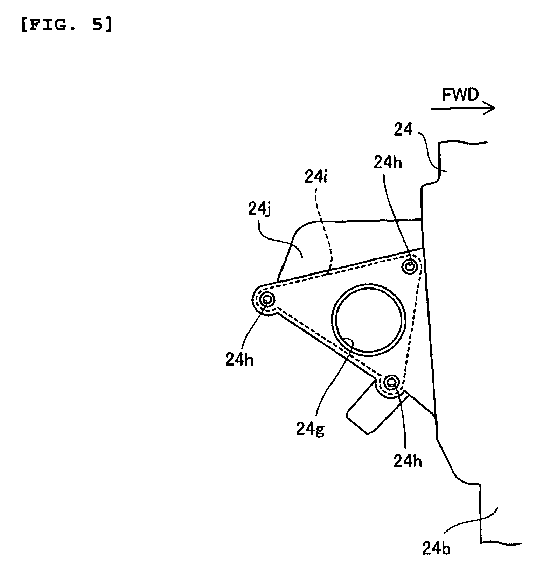

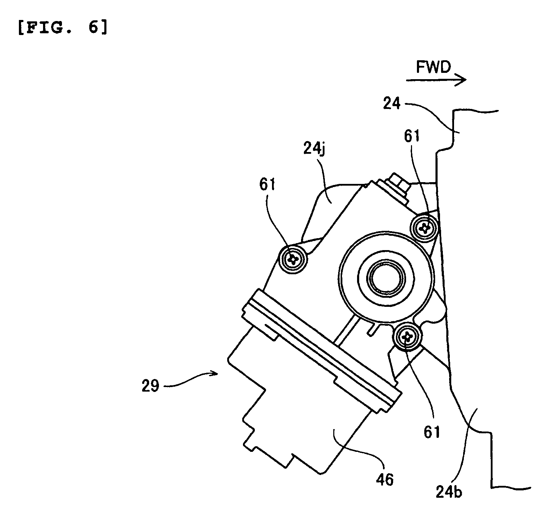

As shown in FIG. 5, a projection 24j is formed at a rear part of the cleaner box 24. The projection 24j is formed together with a plate 24i having an opening 24g and three screw holes 24h by insert molding. As shown in FIG. 6, a funnel moving mechanism 29 is screwed to the screw holes 24j of the cleaner box 24 from outside.

As shown in FIG. 3, one fixed funnel 26 and one movable funnel 27 are provided for each cylinder 16 of the engine 14. The fixed funnel 26 is secured to the cleaner box 24, and has a function of introducing purified air in the cleaner box 24 to the intake port 17a. The movable funnel 27 is disposed on the air supply side of the fixed funnel 26, and has a function of introducing purified air in the cleaner box 24 to the intake port 17a, in conjunction with the fixed funnel 26.

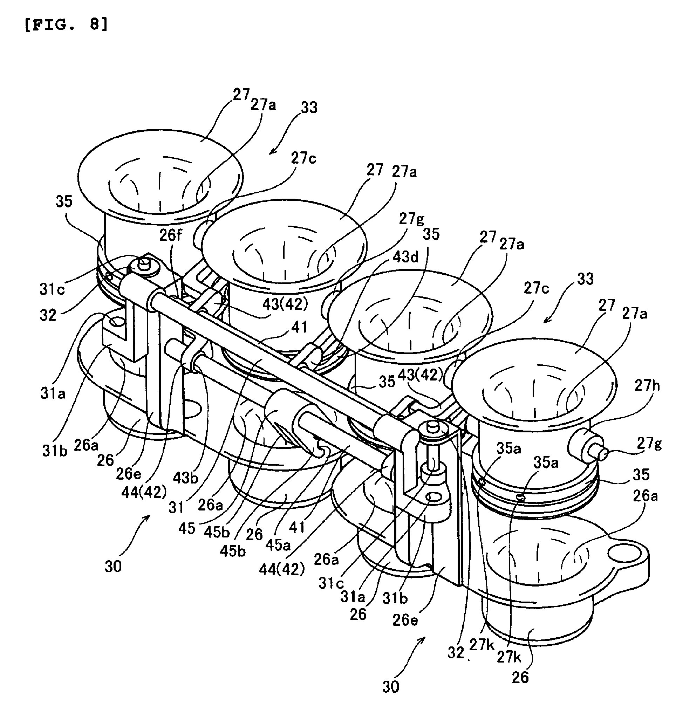

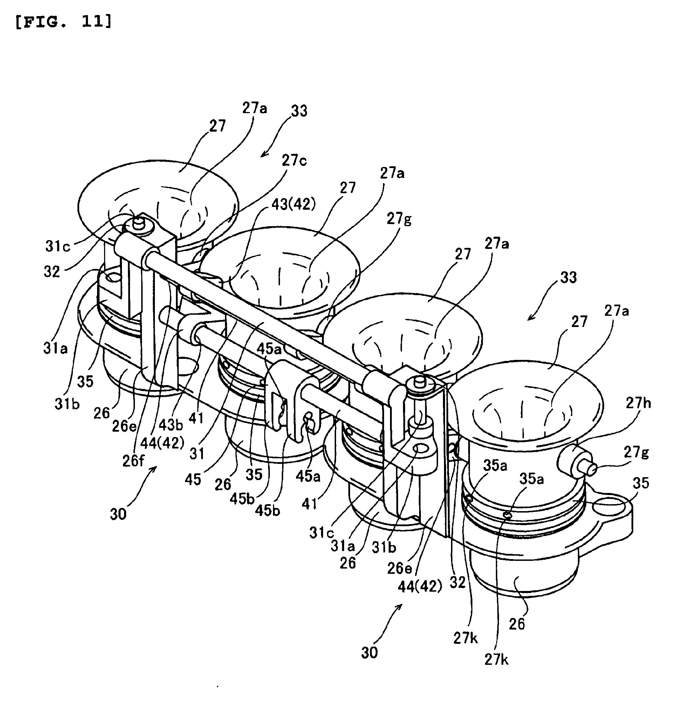

As shown in FIGs. 8 to 13, the movable funnel 27 is translatable between the spaced position (shown in FIGs. 8 to 10) at which its opening 27b on the fixed funnel 26 side is spaced apart from an opening 26a of the fixed funnel 26 on the air supply side, and the contacting position (shown in FIGs. 11 to 13) at which the opening 27b of the movable funnel 27 is in contact with the opening 26a of the fixed funnel 26. Here, as shown in FIG. 3, when the movable funnel 27 is in the spaced position (shown in FIGs. 8 to 10), the intake pipe extending from the cleaner box 24 to the cylinder 16 is made up of the fixed funnel 26, the throttle body 18 and the intake port 17a. On the other hand, when the movable funnel 27 is in the contacting position (shown in FIGs. 11 to 13), the intake pipe extending from the cleaner box 24 to the cylinder 16 is made up of the movable funnel 27, the fixed funnel 26, the throttle body 18 and the intake port 17a.

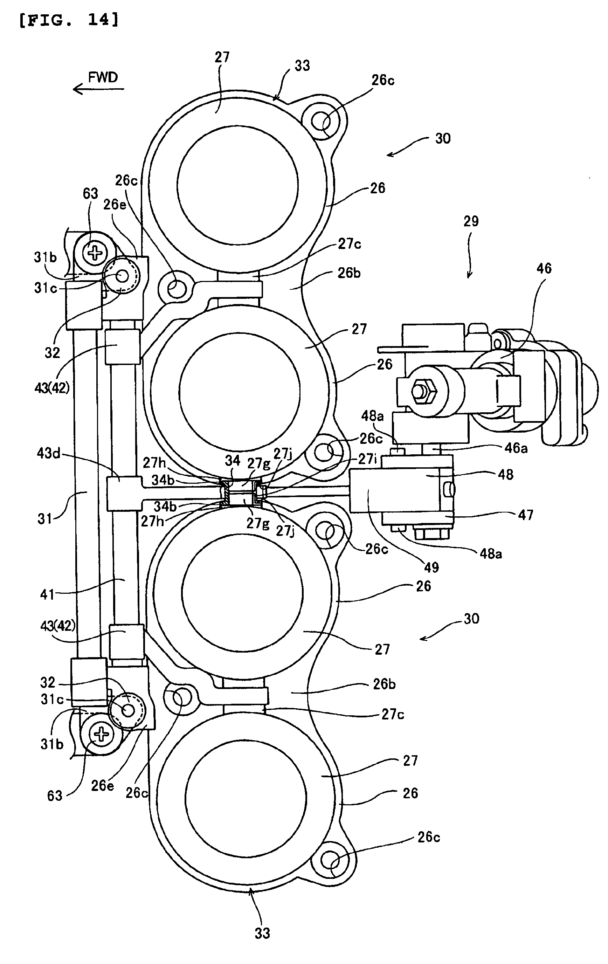

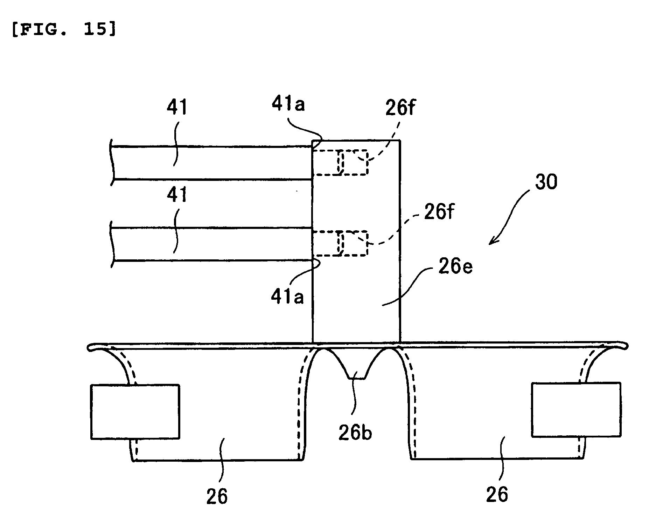

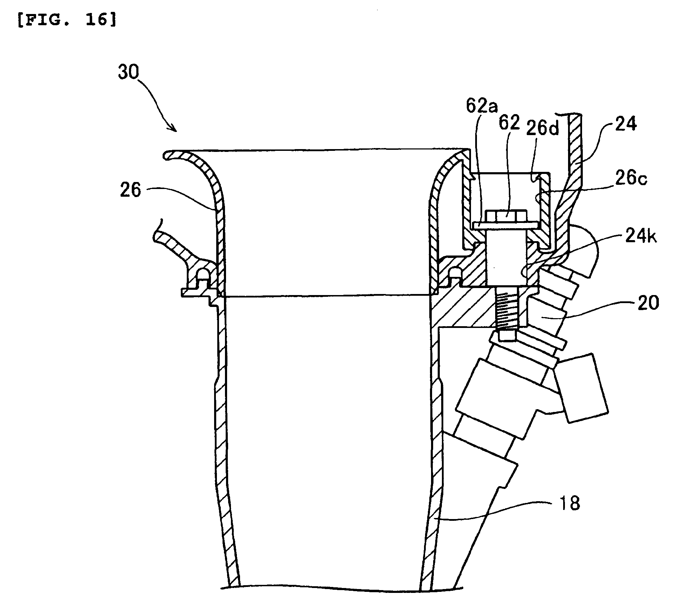

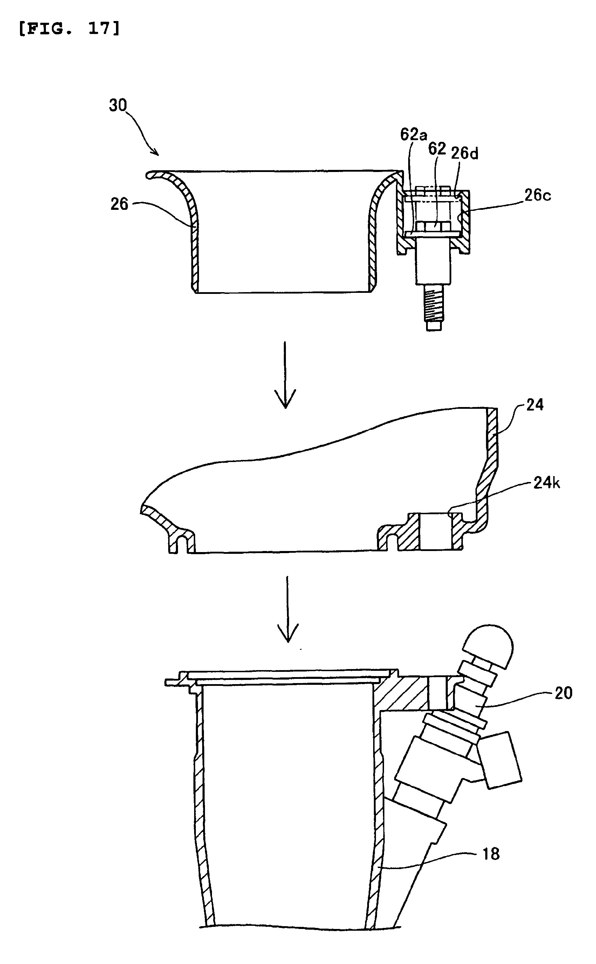

As shown in FIGs. 14 and 15, two adjacent fixed funnels 26 are integrated together via a connection 26b. That is, this embodiment includes two parts 30, each integrating two adjacent fixed funnels 26 together. As shown in FIG. 14, each part 30, integrating two fixed funnels 26 together, has three screw insertion holes 26c for insertion of screws 62 (see FIG. 16). As shown in FIG. 16, the fixed funnels 26 (part 30) are attached to the cleaner box 24 and the throttle body 18 with the screws 62 inserted into the screw insertion holes 26c. The cleaner box 24 is also formed with screw insertion holes 24k for insertion of the screws 62. An engagement portion 26d is formed on the inner surface of the screw insertion hole 26c of the fixed funnels 26 (part 30). With this construction, as shown in FIG. 17, a head 62a of the screw 62 can be engaged with the engagement portion 26d before the screw 62 is attached to the throttle body 18. Thus, the screw 62 can be prevented from slipping upward out of the screw insertion hole 26c. As shown FIGs. 14 and 15, a support column 26e is formed integrally with the part 30 integrating two fixed funnels 26 together. As shown in FIG. 15, the support column 26e is formed with a pair of rotary shaft support holes 26f for supporting ends of rotary shafts 41 to be described later for rotational movement.

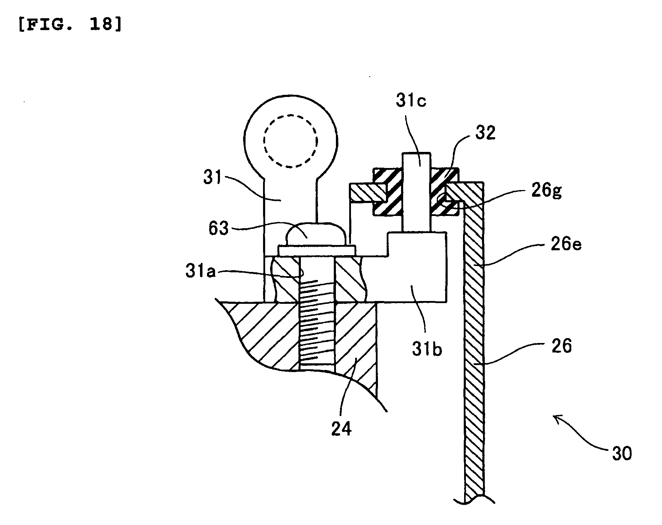

In this embodiment, as shown in FIG. 8, a guide member 31 is attached to the support columns 26e of the two parts 30. The guide member 31 is an example of the "position regulating member" and the "guide part" of the present embodiment. A fixation part 31 b having a fixation hole 31a is provided at both ends of the guide member 31. As shown in FIG. 14, the guide member 31 is screwed at the fixation holes 31a (see FIG. 8) to the cleaner box 24 (see FIG. 2) with screws 63. As shown in FIGs. 8 and 14, the fixation parts 31 b are each formed with a cylindrical portion 31 c projecting upward. As shown in FIG. 18, the cylindrical portions 31 c formed at both ends of the guide member 31 are respectively inserted into insertion holes 26g of the support columns 26e of the part 30 via rubber members 32. That is, the guide member 31 has a function of regulating the attachment positions of the two parts 30. With this construction, changes in the interval between the two parts 30 in the axial direction of the guide member 31 can be restricted.

In this embodiment, as shown in FIG. 3, the guide member 31 functions as a guide when attaching the air filter 25 to the cleaner box 24. Specifically, the air filter 25 can be attached to the cleaner box 24 by holding the air filter 25 with the contacting portion 25a at the rear part thereof in contact with the guide member 31 and then rotating the air filter 25 about the guide member 31 in P direction of FIG. 3. The guide member 31 also has a function of preventing the rear part of the air filter 25 from coming upward out of position when the air filter 25 is attached to the cleaner box 24.

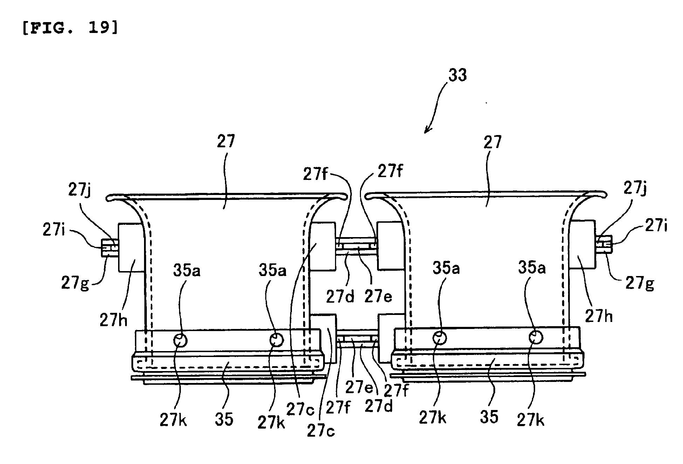

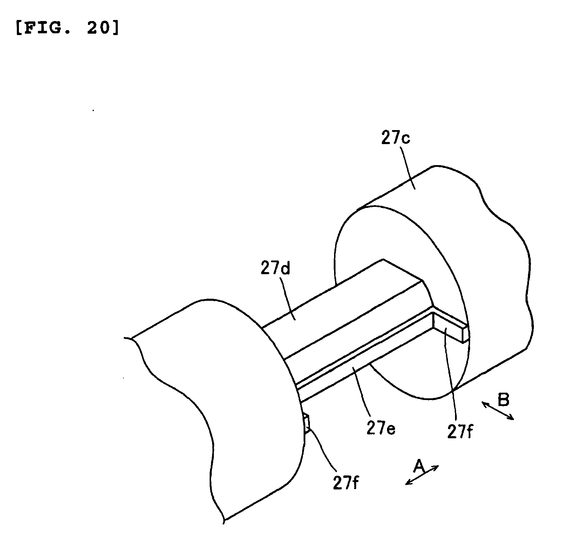

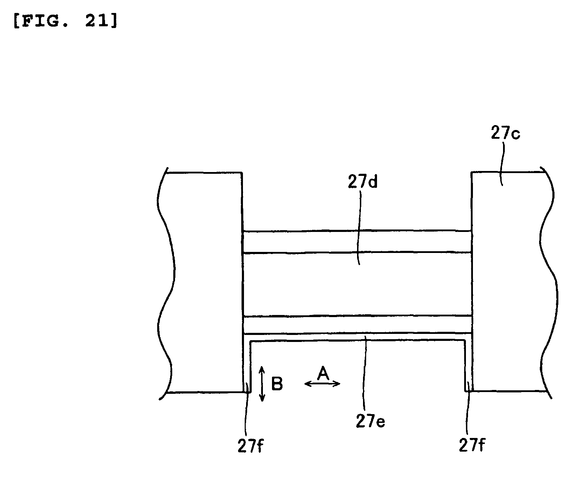

In this embodiment, as shown in FIGs. 14 and 19, two adjacent movable funnels 27 are integrated together via a pair of support shafts 27c (see FIG. 19). That is, this embodiment includes two parts 33, each integrating two adjacent movable funnels 27 together. The support shaft 27c is disposed between the two movable funnels 27 of the part 33. The support shaft 27c is supported by a parallel link 42 to be described later so that the movable funnels 27 (part 33) are translatable. With this structure, two movable funnels 27 can be translatably supported by one parallel link 42. Thus, the number of parallel links 42 can be reduced compared to the case where a parallel link 42 is provided for each movable funnel 27. As shown in FIG. 19, the support shaft 27c has a small diameter portion 27d formed with ribs 27e and 27f. As shown in FIGs. 20 and 21, the rib 27e is formed on the outer surface of the small diameter portion 27d to extend in the axial direction of the support shaft 27c (A direction), and the ribs 27f are formed at both ends of the small diameter portion 27d to extend in a radial direction of the support shaft 27c (B direction).

As shown in FIG. 19, a support shaft 27h having a small diameter portion 27g is provided on outer sides of the part 33 integrating two adjacent movable funnels 27 together. The small diameter portion 27g of the support shaft 27h is formed with ribs 27i and 27j. The ribs 27i and 27j are similar in shape to the ribs 27e and 27f shown in FIGs. 20 and 21, respectively. That is, the rib 27i is formed on the outer surface of the small diameter portion 27g to extend in the axial direction of the support shaft 27h, and the rib 27j is formed at an end of the small diameter portion 27g on the movable funnel 27 side to extend in a radial direction of the support shaft 27h. As shown in FIG. 14, the two parts 33, each integrating two movable funnels 27 together, are disposed such that their respective end surfaces of the small diameter portions 27g of the support shafts 27h are opposed to each other.

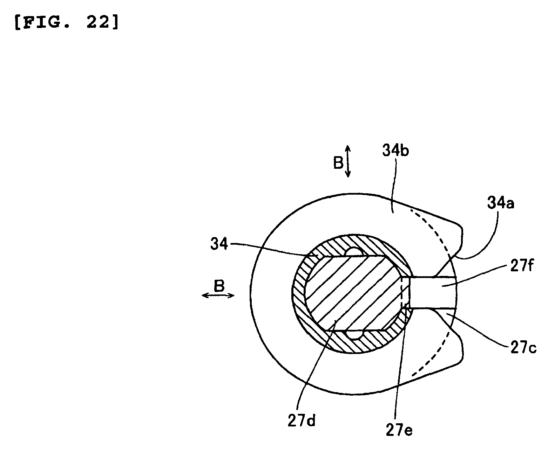

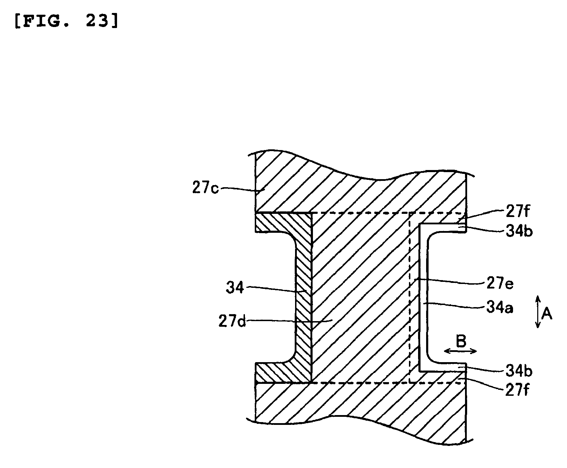

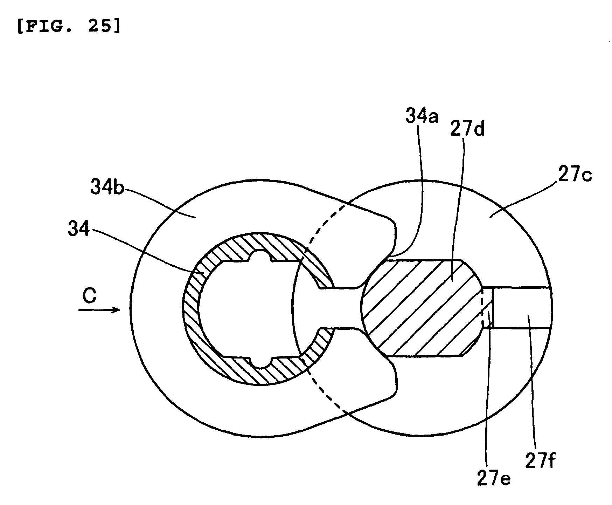

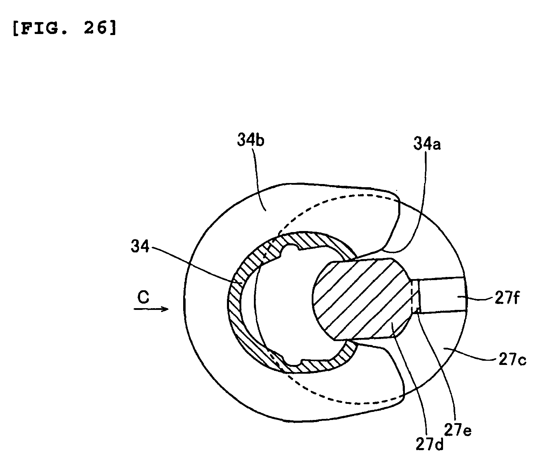

In this embodiment, as shown in FIGs. 22 and 23, a split bushing 34 is mounted on the small diameter portion 27d of the support shaft 27c of the movable funnels 27 (part 33). The split bushing 34 has a function of allowing rotational movement of the parallel link 42 to be described later relative to the support shaft 27c. As shown in FIGs. 22 to 24, the split bushing 34 has a split portion 34a extending in the axial direction of the support shaft 27c (see FIGs. 22 and 23) (A direction). The split bushing 34 is elastically deformable so that the split width of the split portion 34a can be made larger. A flange 34b is provided at both ends of the split bushing 34 that projects in a radial direction of the support shaft 27c (B direction). The flange 34b is integrally provided with a split portion 34a. The split portion 34a in the flange 34b is shaped such that its split width becomes gradually larger along the projecting direction of the flange 34b. With the split bushing 34 constructed as described above, the flange 34b of the split bushing 34 is held in contact with the small diameter portion 27d of the support shaft 27c (as shown in FIG. 25), and then pushed in C direction to obtain the state shown in FIG. 26, where the split portion 34a of the split bushing 34 catches the small diameter portion 27d of the support shaft 27c therein. Then, by further pushing the split bushing 34 in C direction from the state of FIG. 26, the split bushing 34 can be mounted on the small diameter portion 27d of the support shaft 27c as shown in FIG. 22.

As shown in FIGs. 22 and 23, when the split bushing 34 is mounted on the small diameter portion 27d of the support shaft 27c, the split portion 34a of the split bushing 34 is in engagement with the rib 27e of the support shaft 27c by catching the rib 27e therein and the split portion 34a in the flange 34b is in engagement with the rib 27f of the support shaft 27c by catching the rib 27f therein.

As shown in FIG. 14, such a split bushing 34 as described above is also mounted on the small diameter portions 27g of the support shafts disposed 27h between the two parts 33, each integrating two movable funnels 27 together. Between the two parts 33 each integrating two movable funnels 27 together, only one split bushing 34 is mounted in such a manner as to cover the two small diameter portions 27g of the support shafts 27h.

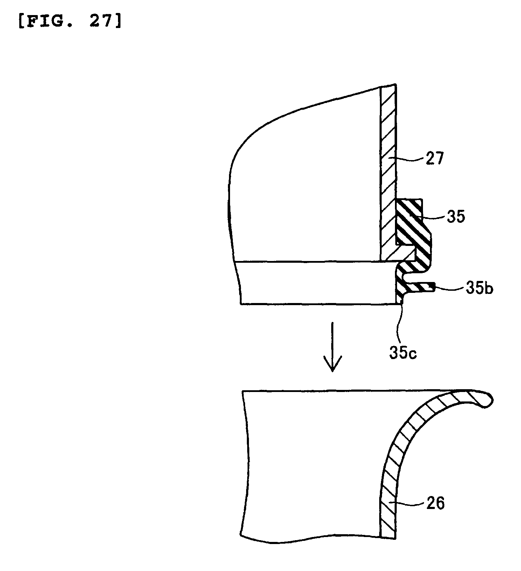

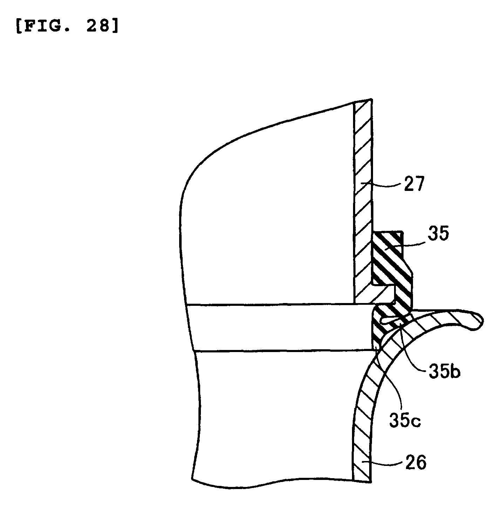

In this embodiment, as shown in FIGs. 7 and 9, a rubber seal member 35 is mounted at the lower end of the movable funnel 27, which is on the fixed funnel 26 side. As shown in FIG. 19, the seal member 35 is formed with four engagement holes 35a. The seal member 35 can be prevented from slipping off downward from the lower end of the movable funnel 27 by engagement of four projections 27k of the movable funnel 27 with the engagement holes 35a. As shown in FIG. 27, the seal member 35 is formed with a first seal portion 35b extending laterally and a second seal portion 35c extending downward. When the movable funnel 27 translates from the spaced position (shown in FIG. 27) to the contacting position (shown in FIG. 28), the first seal portion 35b comes into contact with the fixed funnel 26 to block the gap between the movable funnel 27 and the fixed funnel 26. Also, the first seal portion 35b is elastically deformed upward so that the second seal portion 35c also comes into contact with the fixed funnel 26 to block the gap between the movable funnel 27 and the fixed funnel 26. That is, the seal member 35 has a double seal structure.

In this embodiment, as shown in FIGs. 9 and 12, the funnel moving mechanism 29 uses a parallel link 42 to be described later to translate the movable funnel 27 between the spaced position (shown in FIGs. 8 and 9) and the contacting position (shown in FIGs. 11 and 12).

In a specific structure of the funnel moving mechanism 29, as shown in FIGs. 8 and 14, an end of the rotary shaft 41 is rotatably supported by the rotary shaft support hole 26f (see FIG. 15) of the support column 26e provided to the fixed funnels 26 (part 30). In this embodiment, as shown in FIG. 9, the rotary shaft 41 is disposed on the front side of the movable funnel 27 in the running direction of the vehicle (FWD direction indicated by the arrow). The rotary shaft 41 is an example of the "link mechanism" of the present embodiment. As shown in FIG. 15, one and the other ends of the rotary shaft 41 are each formed with a stepped portion 41 a, which is in contact with the opening edge of the rotary shaft support hole 26f of the support column 26e. Thus, axial movement of the rotary shaft 41 is regulated.

As shown in FIG. 14, a parallel link 42 is attached to the one and the other ends of the rotary shaft 41 so as to move rotationally together therewith. The parallel link 42 is an example of the "link mechanism" of the present embodiment. As shown in FIGs. 8 and 10, the parallel link 42 includes an upper link lever 43 attached to the upper rotary shaft 41 for rotational movement thereabout and a lower link lever 44 attached to the lower rotary shaft 41 for rotational movement thereabout. The upper link lever 43 and the lower link lever 44 are examples of the "link mechanism" and the "link lever" of the present embodiment.

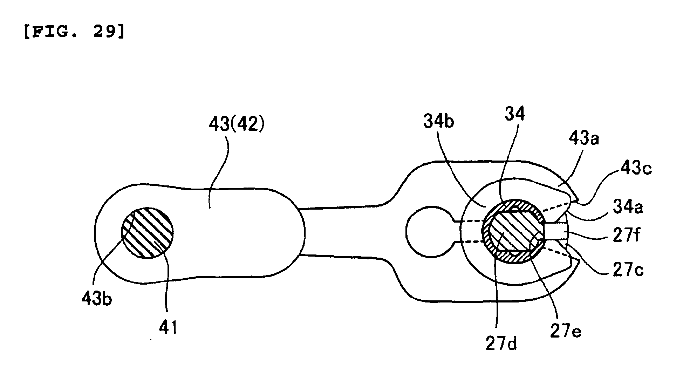

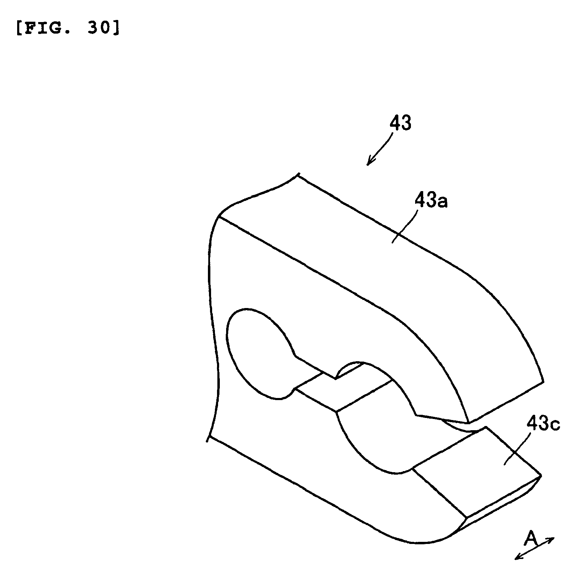

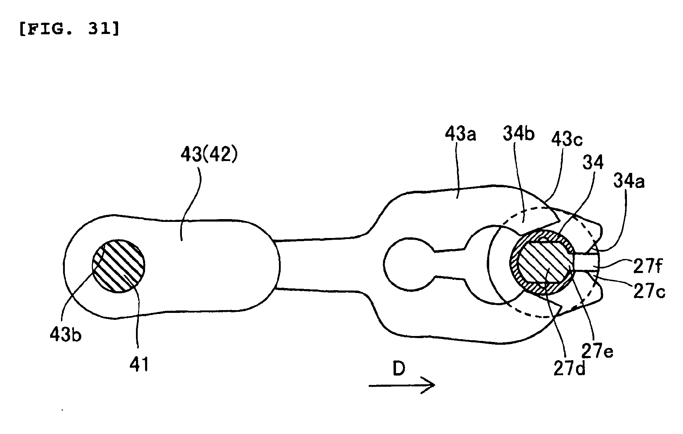

As shown in FIG. 29, the upper link lever 43 has a fitting part 43a and a rotary shaft insertion hole 43b. As shown in FIGs. 8 and 10, the fitting part 43a of the upper link lever 43 receives the upper support shaft 27c (small diameter portion 27d) of the movable funnel 27 via the split bushing 34. With this construction, the upper link lever 43 is rotationally movable relative to the upper support shaft 27c. As shown in FIGs. 29 and 30, the fitting part 43a has a split portion 43c extending in the axial direction of the support shaft 27c (A direction). The fitting part 43a is elastically deformable so that the split width of the split portion 43c can be made larger. With the fitting part 43a constructed as described above, the split portion 43c of the fitting part 43a is pushed against the split bushing 34 (support shaft 27c) in D direction to obtain the state shown in FIG. 31, where the split portion 43c of the fitting part 43a catches the split bushing 34 (support shaft 27c) therein. Then, by further pushing the fitting part 43a in D direction from the state shown in FIG. 31, the fitting part 43a can be fitted on the split bushing 34 (support shaft 27c) as shown in FIG. 29.

As shown in FIGs. 10 and 13, the upper rotary shaft 41 is inserted into the rotary shaft insertion hole 43b of the upper link lever 43 so that the upper link lever 43 moves rotationally together with the upper rotary shaft 41. As shown in FIG. 14, a link lever 43d is disposed between the parts 33 each integrating two movable funnels 27. The link lever 43d has a fitting part 43a (see FIGs. 9 and 12), a rotary shaft insertion hole 43b and a split portion 43c similar to those of the upper link lever 43.

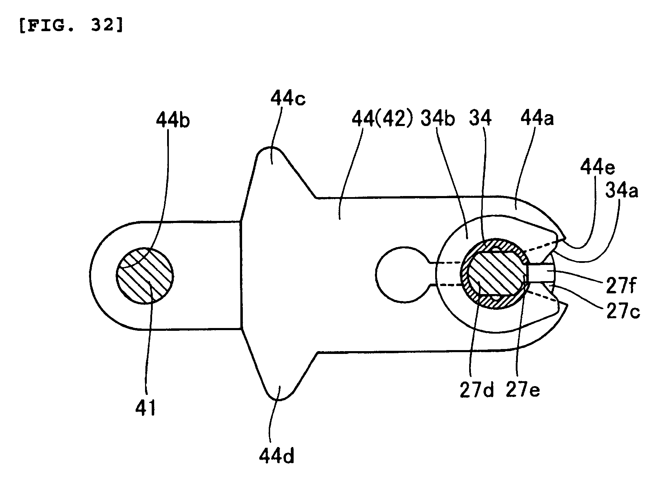

As shown in FIG. 32, the lower link lever 44 has a fitting part 44a, a rotary shaft insertion hole 44b and two stoppers 44c and 44d. The fitting part 44a of the lower link lever 44 receives the lower support shaft 27c (small diameter portion 27d) of the movable funnel 27 via the split bushing 34. With this construction, the lower link lever 44 is rotationally movable relative to the lower support shaft 27c. The fitting part 44a has a split portion 44e extending in the axial direction of the support shaft 27c. The fitting part 44a is elastically deformable so that the split width of the split portion 44e can be made larger. The split portion 44e has a function similar to that of the split portion 43c of the upper link lever 43 described above. The lower rotary shaft 41 is inserted into the rotary shaft insertion hole 44b of the lower link lever 44 so that the lower link lever 44 rotates together with the lower rotary shaft 41. As shown in FIG. 10, the stopper 44c of the lower link lever 44 has a function of regulating rotational movement of the lower link lever 44 in E direction by coming into contact with the support column 26e of the fixed funnel 26 when the lower link lever 44 has moved rotationally by a predetermined amount in E direction (when the movable funnel 27 has reached the spaced position). Also, as shown in FIG. 13, the stopper 44d of the lower link lever 44 has a function of regulating rotational movement of the lower link lever 44 in F direction by coming into contact with the support column 26e of the fixed funnel 26 when the lower link lever 44 has moved rotationally by a predetermined amount in F direction (when the movable funnel 27 has reached the contacting position).

As shown in FIG. 11, the lower rotary shaft 41 is provided with a support part 45 for rotational movement together therewith. The support part 45 is made up of a pair of holding pieces 45b each formed with a cutout 45a.

With the support part 45 and the parallel link 42 constructed as described above, as shown in FIGs. 9 and 10, when the support part 45 (see FIG. 9) is rotationally moved in E direction to rotationally move the parallel link 42 (see FIG. 10) in E direction, the movable funnel 27 is translated away from the fixed funnel 26. Also, as shown in FIGs. 12 and 13, when the support part 45 (see FIG. 12) is rotationally moved in F direction to rotationally move the parallel link 42 (see FIG. 13) in F direction, the movable funnel 27 is translated closer to the fixed funnel 26. Here, as shown in FIGs. 10 and 13, the amount of rotational movement of the parallel link 42 is adjusted such that the position of the opening end of the movable funnel 27 on the side of the opening 26a of the fixed funnel 26 is substantially the same as viewed in the opening direction of the fixed funnel 26 between when the movable funnel 27 is in the spaced position (shown in FIG. 10) and when it is in the contacting position (shown in FIG. 13). With this construction, even when the opening 27b of the movable funnel 27 is spaced apart from the opening 26a of the fixed funnel 26 while the engine 14 is rotating at a high speed, air can flow linearly through the movable funnel 27 into the fixed funnel 26 and hence an increase in air flow resistance can be restricted. As a result, a decrease in air intake efficiency can be restricted while the engine 14 is rotating at a high speed (when the movable funnel 27 is spaced apart from the fixed funnel 26).

As shown in FIG. 14, the parallel link 42, which includes the upper link lever 43 (see FIG. 8) and the lower link lever 44, is moved rotationally by the driving force of a motor 46 disposed outside the cleaner box 24 (see FIG. 3). The motor 46 is an example of the "drive source" of the present embodiment.

Specifically, the motor 46 is disposed on the rear side of the movable funnel 27 in the running direction of the vehicle (FWD direction indicated by the arrow). As shown in FIG. 9, one end of a rotary lever 47 is attached to an output shaft 46a of the motor 46. The other end of the rotary lever 47 is formed with an insertion hole 47a.

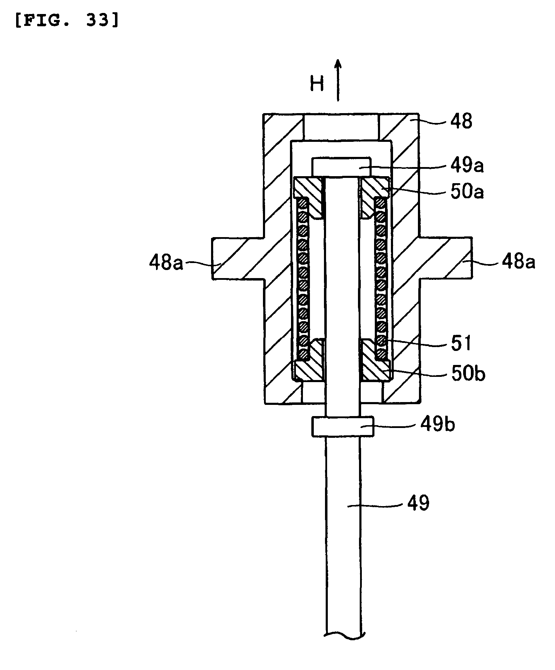

As shown in FIG. 3, the rotary lever 47 is disposed inside the cleaner box 24 (projection 24j) via the opening 24g of the projection 24j of the cleaner box 24. As shown in FIG. 9, a projection 48a provided on both sides of a movable member 48 is attached to the insertion hole 47a of the rotary lever 47 so as to be pivotable relative to the insertion hole 47a. As shown in FIG. 33, one end of a movable shaft 49 is disposed inside the movable member 48. In this embodiment, only one movable shaft 49 is provided. The movable shaft 49 is an example of the "transmission shaft" of the present embodiment.

In this embodiment, as shown in FIG. 14, the movable shaft 49 is disposed between the two parts 33 (movable funnels 27). As shown in FIG. 33, the movable shaft 49 is provided with an upper pressing part 49a and a lower pressing part 49b at a predetermined interval. Bushes 50a and 50b are provided inside the movable member 48 for supporting the movable shaft 49 slidably. The bushinges 50a and 50b are disposed between the upper pressing part 49a and the lower pressing part 49b. A compression spring 51 is mounted inside the movable member 48 between the bushinges 50a and 50b. As shown in FIG. 9, a support shaft 52 is provided at the other end of the movable shaft 49. The cutout 45a of the support part 45, which moves rotationally together with the rotary shaft 41, is in engagement with the support shaft 52.

When the rotary lever 47 is rotationally moved in G direction (as shown in FIG. 9) by the driving force of the motor 46, as shown in FIG. 33, the movable member 48 moves in H direction to produce urging force in H direction in the compression spring 51, which in turn urges the movable shaft 49 in H direction. Thus, as shown in FIG. 9, the urging force of the compression spring 51 (see FIG. 33) is transmitted via the movable shaft 49, the support part 45 and the rotary shaft 41 to the parallel link 42 (see FIG. 10), which in turn moves rotationally in E direction. Also, as shown in FIG. 10, when the stopper 44c of the parallel link 42 is in contact with the support column 26e, the urging force of the compression spring 51 (see FIG. 33) is transmitted via the movable shaft 49 to the parallel link 42 so that the parallel link 42 rotationally moves in E direction. With this construction, when the lower link lever 44 rotationally moves in E direction and the stopper 44c has come into contact with the support column 26e (when the movable funnel 27 has reached the spaced position), the stopper 44c of the lower link lever 44 can be kept in contact with the support column 26e by the urging force of the compression spring 51. Thus, when the movable funnel 27 is to be kept at the spaced position, displacement of the movable funnel 27 from the spaced position can be restricted.

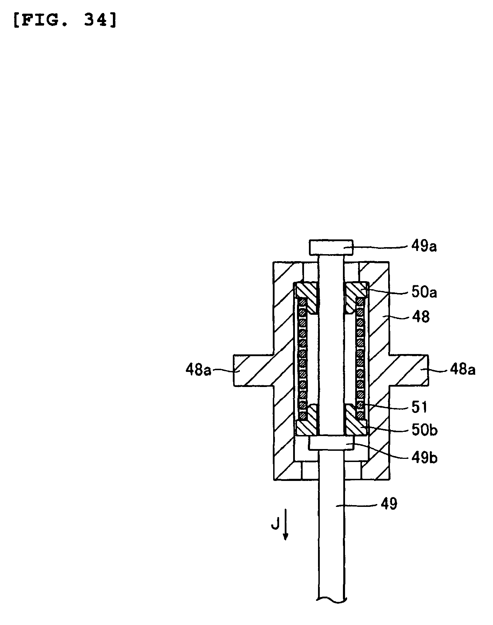

On the other hand, when the rotary lever 47 is rotationally moved in I direction (as shown in FIG. 12) by the driving force of the motor 46, as shown in FIG. 34, the movable member 48 moves in J direction to produce urging force in J direction in the compression spring 51, which in turn urges the movable shaft 49 in J direction. Thus, as shown in FIG. 12, the urging force of the compression spring 51 (see FIG. 34) is transmitted via the movable shaft 49, the support part 45 and the rotary shaft 41 to the parallel link 42 (see FIG. 13), which in turn moves rotationally in F direction. Also, as shown in FIG. 13, when the stopper 44d of the parallel link 42 is in contact with the support column 26e, the urging force of the compression spring 51 (see FIG. 34) is transmitted via the movable shaft 49 to the parallel link 42 so that the parallel link 42 rotationally moves in F direction. With this construction, when the lower link lever 44 rotationally moves in F direction and the stopper 44d has come into contact with the support column 26e (when the movable funnel 27 has reached the contacting position), the stopper 44d of the lower link lever 44 can be kept in contact with the support column 26e by the urging force of the compression spring 51. Thus, when the movable funnel 27 is to be kept at the contacting position, displacement of the movable funnel 27 from the contacting position can be restricted.

Now, with reference to FIGs. 3, 9, 12, 33 and 34, description will be made of how the length of the intake pipe is changed between when the engine 14 is rotating at a high speed and when it is rotating at a low speed.

When the engine 14 shown in FIG. 3 is rotating at a high speed, the intake pipe is shortened so that a pulsation effect can be easily obtained. That is, the movable funnel 27 is translated to its spaced position when the engine 14 is rotating at a high speed. By utilizing the pulsation effect, the intake efficiency can be improved by adjusting the length of the intake pipe such that high-pressure pulses come closer to the vicinity of the intake valve.

Specifically, first of all, as shown in FIG. 9, the rotary lever 47 is rotationally moved in G direction by the motor 46 of the funnel moving mechanism 29 to move the movable member 48 in H direction. In this way, urging force in H direction is generated in the compression spring 51 (see FIG. 33) and moves the movable shaft 49 in H direction, which rotationally moves the parallel link 42 (see FIG. 10) in E direction. After that, the parallel link 42 is kept rotationally moving in E direction until the stopper 44c of the lower link lever 44 comes into contact with the support column 26e as shown in FIG. 10.

This causes the movable funnel 27 to be moved to the spaced position with the opening end of the opening 27b of the movable funnel 27 kept in parallel to the opening end of the opening 26a of the fixed funnel 26. As a result, when the engine 14 (see FIG. 3) is rotating at a high speed, the intake pipe is made up of the fixed funnel 26, the throttle body 18 (see FIG. 3) and the intake port 17a (see FIG. 3) and hence can be shortened. Here, when the intake pipe is shortened when the engine 14 shown in FIG. 3 is rotating at a high speed, high-pressure pulses can easily reach the opening of the intake port 17a on the cylinder 16 side when the intake valve 19a opens, thereby improving the intake efficiency.

The position of the opening end of the movable funnel 27 on the side of the opening 26a of the fixed funnel 26 with the movable funnel 27 in the spaced position as shown in FIG. 9 is the same as that with the movable funnel 27 in the contacting position (as shown in FIG. 12) as viewed in the opening direction of the fixed funnel 26. When the movable funnel 27 is in the spaced position, the urging force of the compression spring 51 (see FIG. 33) is transmitted via the movable shaft 49 to the parallel link 42 so that the parallel link 42 rotationally moves in E direction.

When the movable funnel 27 is in the spaced position, as shown in FIG. 9, the fuel injection part 28a of the injector 28 is disposed in the air passageway 27a of the movable funnel 27. When the engine 14 is rotating at a high speed, not only the injector 20 but also the injector 28 injects fuel.

When the engine 14 shown in FIG. 3 is rotating at a low speed, the intake pipe is lengthened so that the pulsation effect can be easily obtained. That is, the movable funnel 27 is translated to its contacting position when the engine 14 is rotating at a low speed.

Specifically, first of all, as shown in FIG. 12, the rotary lever 47 is rotationally moved in I direction by the motor 46 of the funnel moving mechanism 29 to move the movable member 48 in J direction. In this way, urging force in J direction is generated in the compression spring 51 (see FIG. 34) and moves the movable shaft 49 in J direction, which rotationally moves the parallel link 42 (see FIG. 13) in F direction. After that, the parallel link 42 is kept rotationally moving in F direction until the stopper 44d of the lower link lever 44 comes into contact with the support column 26e as shown in FIG. 13.

This causes the movable funnel 27 to be moved to the contacting position with the opening end of the opening 27b of the movable funnel 27 kept in parallel to the opening end of the opening 26a of the fixed funnel 26. As a result, when the engine 14 (see FIG. 3) is rotating at a low speed, the intake pipe is made up of the movable funnel 27, the fixed funnel 26, the throttle body 18 (see FIG. 3) and the intake port 17a (see FIG. 3) and hence can be lengthened. Here, when the intake pipe is lengthened when the engine 14 shown in FIG. 3 is rotating at a low speed, high-pressure pulses can easily reach the opening of the intake port 17a on the cylinder 16 side when the intake valve 19a opens, thereby improving the intake efficiency.

When the movable funnel 27 is in the contacting position as shown in FIG. 12, the urging force of the compression spring 51 (see FIG. 34) is transmitted via the movable shaft 49 to the parallel link 42 so that the parallel link 42 rotationally moves in F direction.

When the engine 14 is rotating at a low speed, only the injector 20 injects fuel.

In this embodiment, as described above, the rotary shaft 41 and the parallel link 42 are disposed on the front side of the movable funnel 27 in the running direction of the vehicle (FWD direction indicated by the arrow) to movably support the movable funnel 27, and the motor 46 is disposed on the rear side of the movable funnel 27 in the running direction of the vehicle to drive the rotary shaft 41 and the parallel link 42 to move the movable funnel 27. Since the motor 46 is disposed on the opposite side (rear side) of the rotary shaft 41 and the parallel link 42, it is not necessary to secure a space for disposing the motor 46 around the rotary shaft 41 and the parallel link 42. With this construction, the surrounding area of the rotary shaft 41 and the parallel link 42 can be simplified.

In this embodiment, the rotary shaft 41 and the parallel link 42 are disposed inside the cleaner box 24, and the motor 46 is disposed outside the cleaner box 24. Since the motor 46 is not disposed in the way of air to be supplied to the fixed funnel 26 (intake passage), air can be smoothly supplied to the fixed funnel 26.

In this embodiment, the rotary shaft 41 and the parallel link 42 are disposed on the air supply side (front side) of the movable funnel 27. Since the rotary shaft 41 and the parallel link 42 are not disposed on the side opposite to the air supply side (rear side) where air tends to flow, disturbance of air flow by the rotary shaft 41 and the parallel link 42 can be restricted. With this construction, air can be smoothly supplied to the movable funnel 27 and the fixed funnel 26.

In this embodiment, one movable shaft 49 is disposed between the movable funnels 27 to transmit the driving force from the motor 46 to the rotary shaft 41 and the parallel link 42. Since the plurality of movable funnels 27 can be driven by the one movable shaft 49, an increase in number of parts for driving the movable funnels 27 can be restricted. With this construction, enlargement of the surrounding area of the rotary shaft 41 and the parallel link 42 can be restricted.

In this embodiment, by using the parallel link 42 to move the movable funnel 27, the opening 27b of the movable funnel 27 on the fixed funnel 26 side can be spaced apart from and brought into contact with the opening 26a of the fixed funnel 26 on the air supply side with the opening 27b of the movable funnel 27 on the fixed funnel side 26 kept in parallel to the opening end of the fixed funnel 26 on the air supply side. With this construction, even when the opening 27b of the movable funnel 27 on the fixed funnel 26 side is spaced apart from the opening 26a of the fixed funnel 26 on the air supply side, air can flow linearly through the movable funnel 27 into the fixed funnel 26, and hence an increase in air flow resistance can be restricted. As a result, a decrease in air intake efficiency can be restricted when the movable funnel 27 is spaced apart from the fixed funnel 26.

In this embodiment, the injector 20 is disposed below the fixed funnel 26 and the injector 28 is disposed above the movable funnel 27. Since the injector 28 can be disposed away from the intake port 17a, it is possible to extend the time for fuel injected from the injector 28 to be taken (supplied) into the intake port 17a. With this construction, when the engine 14 operates at a high speed and hence the flow rate of air to be taken into the intake port 17a is large, more of the fuel injected from the injector 28 can be atomized and vaporized and then taken into the intake port 17a. As a result, the combustion efficiency can be made more optimal. In addition, the temperature of the air-fuel mixture in the intake pipe can be lowered by the effect of vaporization heat due to the atomization and vaporization of more fuel. Thus, the density of the air-fuel mixture in the intake pipe can be increased. In this way, the amount of the air-fuel mixture to be taken into the intake port 17a can be increased, thereby improving the charging efficiency.

In this embodiment, the fuel injection part 28a of the injector 28 is disposed so as to be in the air passageway 27a of the movable funnel 27 when the movable funnel 27 is spaced apart from the fixed funnel 26. With this construction, fuel injected from the fuel injection part 28a of the injector 28 can be prevented from bubbling over out of the movable funnel 27.

The embodiment disclosed herein is intended to be illustrative in all respects, rather than restrictive.

For example, although the present teaching is applied to a motorcycle in the embodiment described above, it is not limited thereto and may also be applied to vehicles other than motorcycles.

In the embodiment described above, the present teaching is applied to a vehicle incorporating a four-cylinder engine. However, the present teaching is not limited thereto and may also be applied to vehicles incorporating a multi-cylinder engine other than a four-cylinder one, vehicles incorporating a single-cylinder engine, and so forth.

In the embodiment described above, the rotary shaft and the parallel link are disposed on the front side of the movable funnel in the running direction of the vehicle, and the motor is disposed on the rear side of the movable funnel in the running direction of the vehicle. However, the present teaching is not limited thereto, and the rotary shaft and the parallel link may be disposed on the rear side of the movable funnel in the running direction of the vehicle, and the motor may be disposed on the front side of the movable funnel in the running direction of the vehicle.

In the embodiment described above, two movable funnels are integrated together. However, the present teaching is not limited thereto, and three or more movable funnels may be integrated together. Alternatively, a separate movable funnel may be provided for each cylinder.

The description above discloses (amongst others) to achieve the foregoing object, an embodiment of a vehicle including: an engine having an intake port; a fixed funnel for introducing air to the intake port of the engine; a movable funnel movably disposed on an air supply side of the fixed funnel for introducing the air to the intake port of the engine in conjunction with the fixed funnel; a link mechanism for movably supporting the movable funnel; and a drive source disposed on an opposite side of the link mechanism with respect to the movable funnel for driving the link mechanism to move the movable funnel.

As described above, the vehicle according to the one embodiment is provided with a link mechanism for movably supporting the movable funnel, and a drive source disposed on the opposite side of the link mechanism with respect to the movable funnel for driving the link mechanism. Since the drive source for driving the link mechanism is disposed on the opposite side of the link mechanism, it is not necessary to secure a space for disposing the drive source around the link mechanism. With this construction, the surrounding area of the link mechanism can be simplified.

In the vehicle according to the one embodiment, preferably, the link mechanism is disposed on a front or rear side of the movable funnel in a running direction of the vehicle; and the drive source is disposed on an opposite side of the link mechanism with respect to the movable funnel in the running direction of the vehicle. With this construction, the link mechanism and the drive source are not disposed in the vehicle width direction, and hence an increase in vehicle width can be restricted.

Preferably, the vehicle according to the one embodiment further includes a casing for housing the fixed funnel and the movable funnel therein; the link mechanism is disposed inside the casing; and the drive source is disposed outside the casing. With this construction, since the drive source is not disposed in the way of air to be supplied to the fixed funnel (intake passage), air can be smoothly supplied to the fixed funnel.

In the vehicle including a casing for housing the fixed funnel and the movable funnel therein, preferably, the air is taken into the movable funnel from a side thereof; and the link mechanism is disposed on the side of the movable funnel from which the air is taken. With this construction, since the link mechanism is not disposed on the side opposite to the air supply side where air tends to flow, disturbance of air flow by the link mechanism can be restricted. Thus, air can be smoothly supplied to the movable funnel and the fixed funnel. The term "side" as used herein is intended to refer not only to transverse (left and right) directions of the vehicle but also to longitudinal directions and oblique directions between the longitudinal and transverse directions, and hence should be interpreted widely.

In this case, preferably, the air is taken into the movable funnel from a front or rear side thereof in a running direction of the vehicle. With this construction, the air passage (intake passage) is not disposed in the vehicle width direction, and hence an increase in vehicle width can be restricted.

Preferably, the vehicle according to the one embodiment is provided with a plurality of movable funnels, and further includes a transmission shaft disposed between the plurality of movable funnels for transmitting driving force from the drive source to the link mechanism. With this construction, since the plurality of movable funnels can be driven by the one transmission shaft, an increase in number of parts for driving the movable funnels can be restricted. Thus, enlargement of the surrounding area of the link mechanism can be restricted.

In the vehicle according to the one embodiment, preferably, the link mechanism includes a link lever for supporting the movable funnel movably and a rotary shaft; and the movable funnel is moved by rotation of the link lever about the rotary shaft. With this construction, the movable funnel can be easily spaced apart from and brought into contact with the fixed funnel.

In the vehicle according to the one embodiment, preferably, the link mechanism includes a parallel link for translatably supporting the movable funnel. With this construction, by using the parallel link to move the movable funnel, the opening of the movable funnel on the fixed funnel side can be spaced apart from and brought into contact with the opening of the fixed funnel on the air supply side with the opening end of the movable funnel on the fixed funnel side held parallel to the opening end of the fixed funnel on the air supply side. Thus, even when the opening of the movable funnel on the fixed funnel side is spaced apart from the opening of the fixed funnel on the air supply side, air can flow linearly through the movable funnel into the fixed funnel, and hence an increase in air flow resistance can be restricted. As a result, a decrease in air intake efficiency can be restricted when the movable funnel is spaced apart from the fixed funnel.

Preferably, the vehicle according to the one embodiment further includes: a first fuel injection system disposed below the fixed funnel; and a second fuel injection system disposed above the movable funnel. With this construction, since the second fuel injection system can be disposed away from the intake port, it is possible to extend the time for fuel injected from the second fuel injection system to be taken (supplied) into the intake port. Thus, when the engine operates at a high speed and hence the flow rate of air to be taken into the intake port is large, more of the fuel injected from the second fuel injection system can be atomized and vaporized and then taken into the intake port. As a result, the combustion efficiency can be made more optimal. In addition, the temperature of the air-fuel mixture in the intake passage can be lowered by the effect of vaporization heat due to the atomization and vaporization of more fuel. Thus, the density of the air-fuel mixture in the intake passage can be increased. In this way, the amount of the air-fuel mixture to be taken into the intake port can be increased, thereby improving the charging efficiency.

In this case, preferably, a fuel injection part of the second fuel injection system is disposed so as to be in an air passageway of the movable funnel when the movable funnel is spaced apart from the fixed funnel. With this construction, fuel injected from the fuel injection part of the second fuel injection system can be prevented from bubbling over out of the movable funnel.

Preferably, the vehicle according to the one embodiment is provided with a plurality of fixed funnels, and further includes a position regulating member for regulating attachment positions of the plurality of fixed funnels. With this construction, the plurality of fixed funnels can be disposed in the predetermined positions.

In this case, preferably, the vehicle further includes: a cleaner casing for housing the fixed funnels and the movable funnel therein; and a filter attached to the cleaner casing for purifying the air, and the position regulating member functions as a guide when attaching the filter to the cleaner casing. With this construction, the filter can be easily attached to the cleaner casing with the plurality of fixed funnels disposed in the predetermined positions.

Preferably, the vehicle according to the one embodiment further includes: a cleaner casing for housing the fixed funnel and the movable funnel therein; a filter attached to the cleaner casing for purifying the air; and a guide part that functions as a guide when attaching the filter to the cleaner casing. With this construction, the filter can be easily attached to the cleaner casing.

Preferably, the vehicle according to the one embodiment further includes a seal member disposed between the fixed funnel and the movable funnel. With this construction, air leakage through the gap between the movable funnel and the fixed funnel can be restricted when the movable funnel is in contact with the fixed funnel.

The description above further discloses in order to provide a vehicle having a simplified structure of a link mechanism for moving a movable funnel and the surrounding area of the link mechanism, an embodiment of a motorcycle (vehicle) which includes a fixed funnel 26 for introducing air to an intake port 17a of an engine 14, and a movable funnel 27 movably disposed above the fixed funnel 26 for introducing the air to the intake port 17a of the engine 14 in conjunction with the fixed funnel 26. The motorcycle (vehicle) also includes a rotary shaft 41 and a parallel link 42 disposed on the front side of the movable funnel 27 in the running direction of the vehicle for translatably supporting the movable funnel 27, and a motor 46 disposed on the rear side of the movable funnel 27 in the running direction of the vehicle for driving the parallel link 42 to move the movable funnel 27.

Further, the description discloses, according to a preferred first aspect, a vehicle comprising: an engine having an intake port; a fixed funnel for introducing air to the intake port of the engine; a movable funnel movably disposed on an air supply side of the fixed funnel for introducing the air to the intake port of the engine in conjunction with the fixed funnel; a link mechanism for movably supporting the movable funnel; and a drive source disposed on an opposite side of the link mechanism with respect to the movable funnel for driving the link mechanism to move the movable funnel.

Further, according to a preferred second aspect, the link mechanism is disposed on a front or rear side of the movable funnel in a running direction of the vehicle; and the drive source is disposed on an opposite side of the link mechanism with respect to the movable funnel in the running direction of the vehicle.

Further, according to a preferred third aspect, the vehicle further comprises: a casing for housing the fixed funnel and the movable funnel therein, wherein: the link mechanism is disposed inside the casing; and the drive source is disposed outside the casing.

Further, according to a preferred fourth aspect, the air is taken into the movable funnel from a side thereof; and the link mechanism is disposed on the side of the movable funnel from which the air is taken.

Further, according to a preferred fifth aspect, the air is taken into the movable funnel from a front or rear side thereof in a running direction of the vehicle.

Further, according to a preferred sixth aspect, a plurality of movable funnels are provided; and the vehicle further comprises a transmission shaft disposed between the plurality of movable funnels for transmitting driving force from the drive source to the link mechanism.

Further, according to a preferred seventh aspect, the link mechanism includes a link lever for supporting the movable funnel movably and a rotary shaft; and the movable funnel is moved by rotation of the link lever about the rotary shaft.

Further, according to a preferred eighth aspect, the link mechanism includes a parallel link for translatably supporting the movable funnel.

Further, according to a preferred ninth aspect, the vehicle further comprises: a first fuel injection system disposed below the fixed funnel; and a second fuel injection system disposed above the movable funnel.

Further, according to a preferred tenth aspect, a fuel injection part of the second fuel injection system is disposed so as to be in an air passageway of the movable funnel when the movable funnel is spaced apart from the fixed funnel.

Further, according to a preferred eleventh aspect, a plurality of fixed funnels are provided; and the vehicle further comprises a position regulating member for regulating attachment positions of the plurality of fixed funnels.

Further, according to a preferred twelfth aspect, the vehicle further comprises: a cleaner casing for housing the fixed funnels and the movable funnel therein; and a filter attached to the cleaner casing for purifying the air, wherein the position regulating member functions as a guide when attaching the filter to the cleaner casing.

Further, according to a preferred thirteenth aspect, the vehicle further comprises: a cleaner casing for housing the fixed funnel and the movable funnel therein; a filter attached to the cleaner casing for purifying the air; and a guide part that functions as a guide when attaching the filter to the cleaner casing.

Further, according to a preferred fourteenth aspect, the vehicle further comprises a seal member disposed between the fixed funnel and the movable funnel.

## Claims

1. Vehicle comprising:
an engine (14) having an intake port (17a);
a fixed funnel (26) for introducing air to the intake port (17a) of the engine (14);
a movable funnel (27) movably disposed on an air supply side of the fixed funnel (26) and configured to introduce air to the intake port (17a) of the engine (14) in conjunction with the fixed funnel (26);
a link mechanism (41-44) movably supporting the movable funnel (27) and being disposed on a first side of the movable funnel; and
a drive source (46) for driving the link mechanism (41-44) to move the movable funnel (27), wherein said drive source is disposed on a second side of the movable funnel (27), said second side being arranged opposite to the first side of the link mechanism (41-44), **characterized in that**
the link mechanism includes a link lever (43,44) movably supporting the movable funnel (27) and a rotary shaft, wherein the movable funnel is moved by rotation of the link lever about the rotary shaft.

2. Vehicle according to claim 1, wherein the link mechanism (41-44) is disposed on a front or rear side of the movable funnel (27) in a running direction of the vehicle, and the drive source (46) is disposed on the opposite second side of the link mechanism (41-44) with respect to the movable funnel (27) in the running direction of the vehicle.

3. Vehicle according to claim 1 or 2, further comprising a casing (24) for housing the fixed funnel (26) and the movable funnel (27) therein, wherein the link mechanism (41-44) is disposed inside the casing (24), and the drive source (46) is disposed outside the casing (24).

4. Vehicle according to claim 3, wherein the air is taken into the movable funnel (27) from a side thereof, and the link mechanism (41-44) is disposed on the side of the movable funnel (27) from which the air is taken.

5. Vehicle according to claim 4, wherein the air is taken into the movable funnel (27) from a front or rear side thereof in a running direction of the vehicle.

6. Vehicle according to one of the claims 1 to 5, further comprising a plurality of movable funnels (27) and a transmission shaft (49) disposed between the plurality of movable funnels for transmitting driving force from the drive source (46) to the link mechanism.

7. Vehicle according to one of the claims 1 to 6, wherein the link mechanism includes a parallel link for translatably supporting the movable funnel.

8. Vehicle according to one of the claims 1 to 7, further comprising a first fuel injection system (20) disposed below the fixed funnel, and a second fuel injection system (28) disposed above the movable funnel.

9. Vehicle according to claim 8, wherein a fuel injection part of the second fuel injection system is disposed so as to be in an air passageway of the movable funnel when the movable funnel is arranged in a position spaced apart from the fixed funnel.

10. Vehicle according to one of the claims 1 to 9, further comprising a plurality of fixed funnels (26) and a position regulating member (31) for regulating attachment positions of the plurality of fixed funnels.

11. Vehicle according to claim 10, further comprising a cleaner casing (24) for housing the fixed funnels and the movable funnel therein, and a filter (25) attached to the cleaner casing (24) for purifying the air, wherein the position regulating member (31) functions as a guide when attaching the filter to the cleaner casing.

12. Vehicle according to one of the claims 1 to 10, further comprising a cleaner casing (24) for housing the fixed funnel and the movable funnel therein, a filter (25) attached to the cleaner casing for purifying the air, and a guide part that functions as a guide when attaching the filter to the cleaner casing.

13. Vehicle according to one of the claims 1 to 12, further comprising a seal member (35) disposed between the fixed funnel and the movable funnel.

## Patentansprüche

1. Fahrzeug, das umfasst:
einen Motor (14) mit einem Einlasskanal (17a);
einen feststehenden Trichter (26) zum Einleiten von Luft in den Einlasskanal (17a) des Motors (14);
einen beweglichen Trichter (27), der an einer Luftzuführseite des feststehenden Trichters (26) beweglich angeordnet und so eingerichtet ist, dass er zusammen mit dem feststehenden Trichter (26) Luft in den Einlasskanal (17a) des Motors (14) einleitet;
einen Gelenkmechanismus (41-44), der den beweglichen Trichter (27) beweglich lagert und an einer ersten Seite des beweglichen Trichters angeordnet ist; und
eine Antriebsquelle (46), mit der der Gelenkmechanismus (41-44) angetrieben wird, um den beweglichen Trichter (27) zu bewegen, wobei die Antriebsquelle an einer zweiten Seite des beweglichen Trichters (27) angeordnet ist und die zweite Seite der ersten Seite des Gelenkmechanismus (41-44) gegenüberliegend angeordnet ist, **dadurch gekennzeichnet, dass**
der Gelenkmechanismus einen Gelenkhebel (43, 44), der den beweglichen Trichter (27) beweglich lagert, und eine Drehwelle enthält, wobei der bewegliche Trichter durch Drehung des Gelenkhebels um die Drehwelle herum bewegt wird.

2. Fahrzeug nach Anspruch 1, wobei der Gelenkmechanismus (41-44) an einer vorderen oder einer hinteren Seite des beweglichen Trichters (27) in einer Fahrtrichtung des Fahrzeugs angeordnet ist und die Antriebsquelle (46) an der in Bezug auf den beweglichen Trichter (27) gegenüberliegenden zweiten Seite des Gelenkmechanismus (41-44) in der Fahrtrichtung des Fahrzeugs angeordnet ist.

3. Fahrzeug nach Anspruch 1 oder 2, das des Weiteren ein Gehäuse (24) umfasst, in dem der feststehende Trichter (26) und der bewegliche Trichter (27) aufgenommen sind, wobei der Gelenkmechanismus (41-44) im Inneren des Gehäuses (24) angeordnet ist und die Antriebsquelle (46) außerhalb des Gehäuses (24) angeordnet ist.

4. Fahrzeug nach Anspruch 3, wobei die Luft in den beweglichen Trichter (27) über eine Seite desselben angesaugt wird und der Gelenkmechanismus (41-44) an der Seite des beweglichen Trichters (27) angeordnet ist, über die die Luft angesaugt wird.

5. Fahrzeug nach Anspruch 4, wobei die Luft in den beweglichen Trichter (27) über eine vordere oder eine hintere Seite desselben in einer Fahrtrichtung des Fahrzeugs angesaugt wird.

6. Fahrzeug nach einem der Ansprüche 1 bis 5, das des Weiteren eine Vielzahl beweglicher Trichter (27) sowie eine Übertragungswelle (49) umfasst, die zwischen der Vielzahl beweglicher Trichter angeordnet ist, um Antriebskraft von der Antriebsquelle (46) auf den Gelenkmechanismus zu übertragen.

7. Fahrzeug nach einem der Ansprüche 1 bis 6, wobei der Gelenkmechanismus ein Parallelgelenk enthält, mit dem der bewegliche Trichter verschiebbar gelagert ist.

8. Fahrzeug nach einem der Ansprüche 1 bis 7, das des Weiteren ein erstes Kraftstoff-Einspritzsystem (20), das unterhalb des feststehenden Trichters angeordnet ist, sowie ein zweites Kraftstoff-Einspritzsystem (28) umfasst, das oberhalb des beweglichen Trichters angeordnet ist.

9. Fahrzeug nach Anspruch 8, wobei ein Kraftstoff-Einspritzteil des zweiten Kraftstoff-Einspritzsystems so angeordnet ist, dass er sich in einem Luftdurchlass des beweglichen Trichters befindet, wenn der bewegliche Trichter an einer von dem feststehenden Trichter beabstandeten Position angeordnet ist.

10. Fahrzeug nach einem der Ansprüche 1 bis 9, das des Weiteren eine Vielzahl feststehender Trichter (26) sowie ein Positions-Regulierelement (31) umfasst, mit dem Anbringungspositionen der Vielzahl feststehender Trichter reguliert werden.

11. Fahrzeug nach Anspruch 10, das des Weiteren ein Filtergehäuse (24), in dem die feststehenden Trichter und der bewegliche Trichter aufgenommen sind, sowie einen Filter (25) umfasst, der an dem Filtergehäuse (24) angebracht ist, um die Luft zu reinigen, wobei das Positions-Regulierelement (31) als eine Führung beim Anbringen des Filters an dem Filtergehäuse dient.

12. Fahrzeug nach einem der Ansprüche 1 bis 10, das des Weiteren ein Filtergehäuse (24), in dem der feststehende Trichter und der bewegliche Trichter aufgenommen sind, einen Filter (25), der an dem Filtergehäuse angebracht ist, um die Luft zu reinigen, sowie einen Führungsteil umfasst, der als eine Führung beim Anbringen des Filters an dem Filtergehäuse dient.

13. Fahrzeug nach einem der Ansprüche 1 bis 12, das des Weiteren ein Dichtungselement (35) umfasst, das zwischen dem feststehenden Trichter und dem beweglichen Trichter angeordnet ist.

## Revendications

1. Véhicule comprenant :
- un moteur (14) comportant un orifice d'admission (17a) ;
- un canaliseur fixe (26) pour introduire de l'air dans l'orifice d'admission (17a) du moteur (14) ;
- un canaliseur mobile (27) disposé sur un côté d'alimentation en air du canaliseur fixe (26) et configuré pour introduire de l'air dans l'orifice d'admission (17a) du moteur (14) en conjonction avec le canaliseur fixe (26) ;
- un mécanisme de liaison (41 à 44) supportant de façon mobile de canaliseur mobile (27) et disposé sur un premier côté du canaliseur mobile ; et
- une source d'entrainement (46) pour entrainer le mécanisme de liaison (41 à 44) pour déplacer le canaliseur mobile (27), dans lequel ladite source d'entrainement est disposée sur un second côté du canaliseur mobile (27), ledit second côté étant agencé à l'opposé du premier côté du mécanisme de liaison (41 à 44), **caractérisé en ce que** :
- le mécanisme de liaison inclut un levier de liaison (43, 44) supportant de façon mobile le canaliseur mobile (27) et un arbre rotatif, dans lequel le canaliseur mobile est déplacé par une rotation du levier de liaison autour de l'arbre rotatif.

2. Véhicule selon la revendication 1, dans lequel le mécanisme de liaison (41 à 44) est disposé sur un côté avant ou arrière du canaliseur mobile (27) dans une direction d'avancée du véhicule et la source d'entrainement (46) est disposée sur le second côté opposé du mécanisme de liaison (41 à 44) par rapport au canaliseur mobile (27) dans la direction d'avancée du véhicule.

3. Véhicule selon les revendications 1 ou 2, comprenant en outre une enveloppe (24) pour loger le canaliseur fixe (26) et le canaliseur mobile (27) dans celle-ci, dans lequel le mécanisme de liaison (41 à 44) est disposé à l'intérieur de l'enveloppe (24) et la source d'entrainement (46) est disposée à l'extérieur de l'enveloppe (24).

4. Véhicule selon la revendication 3, dans lequel l'air est amené au canaliseur mobile (27) depuis un côté de celui-ci et le mécanisme de liaison (41 à 44) est disposé sur le côté du canaliseur mobile (27) depuis lequel l'air est amené.

5. Véhicule selon la revendication 4, dans lequel l'air est amené au canaliseur mobile (27) depuis un côté avant ou arrière de celui-ci dans une direction d'avancée du véhicule.

6. Véhicule selon l'une des revendications 1 à 5, comprenant en outre une pluralité de canaliseurs mobiles (27) et un arbre de transmission (49) disposé entre la pluralité de canaliseurs mobiles pour transmettre une force d'entrainement de la source d'entrainement (46) au mécanisme de liaison.

7. Véhicule selon l'une des revendications 1 à 6, dans lequel le mécanisme de liaison inclut une tringle parallèle pour supporter de façon translatable le canaliseur mobile.

8. Véhicule selon l'une des revendications 1 à 7, comprenant en outre un premier système d'injection de carburant (20) disposé au-dessous du canaliseur fixe et un second système d'injection de carburant (28) disposé au-dessus du canaliseur mobile.

9. Véhicule selon la revendication 8, dans lequel une partie d'injection de carburant du second système d'injection de carburant est disposée de manière à être dans une voie de passage d'air du canaliseur mobile lorsque le canaliseur mobile est agencé dans une position espacée du canaliseur fixe.

10. Véhicule selon l'une des revendications 1 à 9, comprenant en outre une pluralité de canaliseurs fixes (26) et un élément de réglage de position (31) pour régler des positions de fixation de la pluralité de canaliseurs fixes.

11. Véhicule selon la revendication 10, comprenant en outre une enveloppe de filtre à air (24) pour loger les canaliseurs fixes et le canaliseur mobile dans celle-ci et un filtre (25) fixé à l'enveloppe de filtre à air (24) pour purifier l'air, dans lequel l'élément de réglage de position (31) fonctionne comme un guide lors de la fixation du filtre à l'enveloppe de filtre à air.

12. Véhicule selon l'une des revendications 1 à 10, comprenant en outre une enveloppe de filtre à air (24) pour loger le canaliseur fixe et le canaliseur mobile dans celle-ci, un filtre (25) fixé à l'enveloppe de filtre à air pour purifier l'air et une partie de guidage fonctionnant comme un guide lors de la fixation du filtre à l'enveloppe de filtre à air.

13. Véhicule selon l'une des revendications 1 à 12, comprenant en outre un élément d'étanchéité (35) disposé entre le canaliseur fixe et le canaliseur mobile.
